# EUROPÄISCHE PATENTSCHRIFT

(11) **EP 4 416 459 B1**
(45) Veröffentlichungstag und Bekanntmachung des Hinweises auf die Patenterteilung: **04.12.2024**
(21) Anmeldenummer: 22801453.6
(22) Anmeldetag: 12.10.2022
(51) Int. Cl.: G01B 11/24, B29D 30/00, G01M 17/02, G06V 10/774, G06V 10/82, G06N 20/00

(54) **VERFAHREN ZUM PRÜFEN VON REIFEN**
METHOD FOR TESTING TYRES
PROCÉDÉ DE TEST DE PNEUMATIQUES

(30) Priorität: 12.10.2021 DE 102021126422
(43) Veröffentlichungstag der Anmeldung: 21.08.2024
(73) Patentinhaber: Dengler, Stefan, 75365 Calw-Stammheim (DE); Mähner, Bernward, 82284 Grafrath (DE)
(72) Erfinder: MÄHNER, Bernward, 82284 Grafrath (DE)
(74) Vertreter: Flügel Preissner Schober Seidel
(86) Internationale Anmeldenummer: PCT/EP2022/078429
(87) Internationale Veröffentlichungsnummer: WO 2023/062096

(56) Entgegenhaltungen:
- EP-B1- 3 545 259
- DE-A1- 102019 120 696
- US-A1- 2021 224 971

## Beschreibung

Die Erfindung betrifft ein Verfahren zum Prüfen von Reifen. Reifen sind rotationssymmetrische Objekte, die eine diffus streuende Oberfläche haben, wie beispielsweise Fahrzeug- oder Flugzeugreifen.

Es ist bekannt, dass zur flächenhaften Bestimmung von Verschiebungen oder Dehnungen eines zu prüfenden Objektes mit diffus streuender Oberfläche interferometrische Messverfahren, wie das ESPI- (Electronic Speckle Pattern Interferometry) oder das Shearing Verfahren zum Einsatz kommen. Welches Verfahren für ein zu prüfendes Objekt angewendet wird, hängt vornehmlich von der zu messenden Größe und dem erforderlichen Messbereich ab. Ein weiterer Aspekt bei der Auswahl des Messverfahrens sind die Kosten für das Messsystem. So hat beispielsweise das Shearing Verfahren gegenüber anderen interferometrischen Messverfahren Vorteile, da es wegen der kurzen erforderlichen Kohärenzlänge mit einfachen Laserdioden auskommt. Ferner ist es, wie es beispielsweise DE 198 59 725 C2 lehrt, auch mit mehreren Laserdioden funktionstüchtig, so dass mit vergleichsweise geringem Aufwand die Beleuchtung an das zu prüfende Objekte angepasst werden kann. Eine apparative Vereinfachung gegenüber dem Shearing Verfahren stellt das in US 6,934,018 B2 beschriebene differometrische Verfahren dar, bei dem die Verwendung eines Interferometers entfällt.

Bei den genannten interferometrischen Messverfahren werden bei statischer Prüfung üblicherweise zwei Zustände des zu prüfenden Objektes verglichen, indem von dem Objekt in zwei unterschiedlichen Belastungszuständen Aufnahmen gemacht und die Interferogramme der beiden Zustände subtrahiert werden. Hierdurch ergibt sich ein Differenzinterferogramm, welches die Verschiebung oder die Dehnung des Objektes zwischen den beiden Zuständen in Form von Interferenzlinien darstellt. Wird der Messkopf mit einer Phasenschiebeeinheit ausgerüstet, so kann eine erweiterte Auswertung nach dem Prinzip des Phasenshiftverfahrens durchgeführt werden (W. Osten, "Digitale Verarbeitung und Auswertung von Interferenzbildern", Kap. 6, Akademie Verlag ISBN 3-05-501294-1). Hierbei werden Phasenbilder erzeugt, welche jedem Bildpunkt einen bestimmten Phasenwinkel zuordnen. Das Phasenshiftverfahren bietet den Vorteil eines normierten Ergebnisbildes, dessen Grauwerte im gesamten Bild proportional zum ermittelten Phasenwinkel sind. Die Lesbarkeit solcher Ergebnisbilder ist gegenüber einfachen Interferenzlinienbildern signifikant erhöht.

Bei der Differometrie hingegen werden Specklemuster von verschiedenen Belastungszuständen subtrahiert. Es kann folglich nur zwischen solchen Punkten unterschieden werden, bei denen die Verformung Null ist, und solchen, bei denen die Verformung ungleich Null ist. Eine quantitative Auswertung ist nicht möglich. Ebenso ist aufgrund des fehlenden Interferometers kein Phasenshiftverfahren durchführbar.

Je nach Form und Größe des zu prüfenden Objektes erfolgt die interferometrische Messung nacheinander oder gleichzeitig in mehreren Abschnitten. Eine typische Anwendung dieser Art ist beispielsweise die interferometrische Prüfung von Reifen. So beschreibt DE 42 31 578 C2 eine sektorweise Prüfung von Reifen. US 5 786 533 schlägt ein Verfahren zum gezielten Lokalisieren von Defekten in Reifen vor, und zwar insbesondere im Gürtelbereich eines Reifens. Eine Auswertung des gesamten Gürtelbereiches ist nur dann möglich, wenn der Reifen in mehreren Sektoren geprüft wird.

Die Positionierung des Messkopfes relativ zu dem zu prüfenden Objekt erfolgt im Allgemeinen durch eine geometrische Vermessung des zu prüfenden Objekts und der anschließenden Berechnung einer geeigneten Position für den Messkopf. Dies wird beispielsweise in DE 103 33 802 B4 beschrieben.

Üblicherweise werden bei abschnittsweise prüfenden Messsystemen die Ergebnisbilder von den einzelnen Abschnitten einzeln oder nebeneinander angeordnet auf einem Sichtsystem angezeigt. Davon ausgehend zeigt EP 1 284 409 A1 ein Verfahren zur Transformation der Ergebnisbilder beziehungsweise der darin abgebildeten Abschnitte des zu prüfenden Objekts in ein gemeinsames Koordinatensystem. Hierzu wird, parallel zur Erfassung der Verformung des Objekts, die Objektoberfläche flächenhaft topometrisch vermessen und den die Objektverformung darstellenden Ergebnisbildern bildpunktweise die zutreffenden Raumkoordinaten zugewiesen. Dieses Verfahren verwendet ein flächenhaft arbeitendes Konturerfassungssystem, das auch integraler Bestandteil des Messkopfes sein kann.

In der Praxis hat es sich allerdings gezeigt, dass der apparative Aufwand zur flächenhaften topometrischen Erfassung der Objektoberfläche insbesondere bei der Verwendung von mehreren Messköpfen erhebliche Kosten verursacht und darüber hinaus die zur Konturerfassung erforderliche Rechenzeit im industriellen Einsatz nicht praktikabel ist. Aus EP 3 545 259 B1 ist allerdings ein Verfahren bekannt, bei dem die messtechnische Erfassung der Raumkoordinaten der in den einzelnen Ergebnisbildern abgebildeten Oberflächenpunkte vermieden und stattdessen die räumlichen Positionen der in den Ergebnisbildern jeweils abgebildeten Abschnitte von der Objektoberfläche relativ zu dem Objekt berechnet werden. Das bekannte Verfahren ermöglicht es zudem, die Bildpunkte von verschiedenen Abschnitten des Objektes in ein gemeinsames Koordinatensystem zu übertragen und in einer Gesamtansicht darzustellen. Die Gesamtansicht kann eine Abwicklung der Objektoberfläche sein, die für den Betrachter gegenüber den üblichen Einzelsektordarstellungen einfacher zu verstehen ist.

Im Stand der Technik ist es ferner bekannt, zur automatisierten Bewertung von interferometrischen Prüfergebnissen von Reifen künstliche Intelligenz, insbesondere in Form des Maschinellen Lernens, einzusetzen. Bei dem an und für sich seit Jahrzehnten bekannten Maschinellen Lernen generieren Algorithmen ein statistisches Modell, das auf Trainingsdaten umfassend Trainingsbilder beruht. Aus den Trainingsdaten werden hierbei Muster und Gesetzmäßigkeiten erkannt, die zum Beispiel eine automatische Diagnose oder Klassifikation ermöglichen.

Dies wird in der am 15. September 2010 veröffentlichten EP 2 065 674 B1 beschrieben, wenngleich zum damaligen Zeitpunkt der hierfür erforderliche Aufwand noch beträchtlich und die Verwendung von einer automatischen Diagnose oder Klassifikation in der Praxis demnach nicht sehr verbreitet war. Im Zuge der zunehmenden Digitalisierung in den letzten Jahren hat künstliche Intelligenz jedoch Einzug in viele Lebensbereiche gehalten. Von der inzwischen banal gewordenen Erkenntnis, künstliche Intelligenz, insbesondere in Form des Maschinellen Lernens, zu verwenden, um bislang manuelle Tätigkeiten erfordernde Prozesse zu automatisieren, zeugen auch eine Vielzahl an Patentanmeldungen, die in den letzten Jahren in den unterschiedlichsten technischen Bereichen veröffentlicht wurden. Ein Beispiel hierfür ist im Bereich der Reifenprüfung DE 10 2019 120 696 A1 oder US 2021/0224971 A1.

Zur Bewertung des Ergebnisses bei einer Reifenprüfung werden die zum Beispiel mittels eines interferometrischen Messverfahrens von einem Reifen gewonnenen Ergebnisbilder einem Deep Learning Modul zur Auswertung zugeführt. Hierfür ist es erforderlich, dass das Deep Learning Modul zuvor angelernt worden ist. Das Anlernen besteht in der Regel in (a) dem Vorgeben von Trainingsdaten mit den typischerweise zu identifizierenden (Bild-)merkmalen, etwa Fehlerstellen, (b) dem Testen der durch Lernprozesse vom Deep Learning Modul erstellten Parameter mittels Validierungsdaten und (c) dem Auswerten von Testdaten mit Kontrolle der Richtigkeit des Ergebnisses durch einen Trainer. Die zum Anlernen des Deep Learning Moduls verwendeten Daten, das heißt Trainings-, Validierungs- und Testdaten, dürfen sich allerdings nicht überlappen oder gar identisch sein, da dies zu einer verzerrten Gewichtung führte.

Die Fehlerstellen von Reifen können in den Ergebnisbildern vielfältige Erscheinungsformen haben. Dies kann beispielsweise aus dem Abstand der Fehlerstelle von der geprüften Oberfläche des Reifens herrühren.

Darüber hinaus enthalten Ergebnisbilder bei der interferometrischen Reifenprüfung häufig Bildmerkmale, die durch irrelevante Verformungen des Reifens hervorgerufen wurden, allerdings keine Fehlerstelle darstellen. Solche Bildmerkmale, die häufig in den Bildern von der Reifenseitenwand, insbesondere am Wulst, wo der Übergang zur Umgebung, also zu einem Bereich außerhalb des Reifens, vorliegt, auftreten, können leicht als Fehlerstelle des Reifens missinterpretiert werden.

Weiterhin können Verformungen in der Umgebung des Reifens, zum Beispiel ein den Reifen transportierendes Förderband, als Fehlerstelle des Reifens falsch interpretiert werden.

DE 10 2019 120 696 A1 schlägt zur Lösung der zuvor geschilderten Probleme das Naheliegende vor, nämlich dass ein Deep Learning Modul Bildbereiche, die außerhalb des Reifens liegen, automatisch erkennt und Fehlerstellen, die innerhalb des Reifens liegen, selbstständig auffindet. Schon das Erkennen des außerhalb des Reifens liegenden Bereiches erfordert jedoch eine relative große Rechenleistung, die nochmals gesteigert werden muss, wenn unterschiedliche Reifentypen und -größen verarbeitet werden sollen. Der bekannte Ansatz erfordert nichts als einen genügend großen Aufwand zum Anlernen des künstlichen Systems und ist demnach trivial.

Der Erfindung liegt die Aufgabe zugrunde, ein Verfahren und eine Vorrichtung zum interferometrischen Prüfen eines Reifens anzugeben, bei denen das selbstständige Erkennen von relevanten Fehlerstellen in dem zu prüfenden Objekt durch ein künstliches System, das mittels wenigstens eines Trainingsdatensatzes angelernt wird und insbesondere geeignet ist, Verfahrensschritte zum Maschinellen Lernen auszuführen, verbessert wird, und zwar dahingehend, dass bei einem reduzierten Aufwand für das Trainieren des künstlichen Systems und bei einem geringeren Rechenaufwand die Auswertung der Ergebnisdaten zuverlässiger durchgeführt werden kann.

Diese Aufgabe wird durch ein Verfahren, ein System, ein Computerprogrammprodukt, ein computerlesbares Speichermedium und eine Vorrichtung gemäß den Ansprüchen gelöst.

Die Erfindung beruht auf der Erkenntnis, die Aufnahmen einer interferometrischen Reifenprüfung systematisch und automatisiert zu analysieren und zu kategorisieren. Als vorteilhaft hat es sich erwiesen, die Aufnahmen an einem Reifen in eine normierte Darstellung überzuführen. Dabei werden die (Größen-)Darstellung des zu prüfenden Objekts, die insbesondere von der Position der Kamera, insbesondere des Messkopfes, zu dem zu prüfenden Objekt abhängt, in den Ergebnisbildern eliminiert, Überlappbereiche entfernt und außerhalb des zu prüfenden Objekts liegende Bildbereiche beseitigt.

Das erfindungsgemäße Verfahren weist die folgenden Verfahrensschritte auf, wobei der Prozessor und das Speichermedium zur Durchführung der Verfahrensschritte geeignet sind:
a) Erzeugen einer Aufnahme mittels einer Kamera von zumindest einem Teilbereich der Oberfläche des Reifen;
b) Erstellen von Eingangsdaten, welche eine aus mindestens einer Aufnahme bestehende Abbildung umfasst;
c) Analysieren der Eingangsdaten zur Bestimmung und Kategorisierung eines kritischen Bereichs, der eine relevante Fehlerstelle umfasst, und eines unkritischen Bereichs, der eine nicht relevante Anomalie umfasst;
d) Speichern der analysierten Abbildung als um den unkritischen Bereich bereinigte Ergebnisdaten; und
e) Speichern der bereinigten Ergebnisdaten als Trainingsdaten in dem Trainingsdatensatz.

Das erfindungsgemäße Verfahren zeichnet sich dadurch aus, dass der benötigte Arbeits- und Rechenaufwand durch das automatisierte Verfahren deutlich reduziert wird. Insbesondere dadurch, dass durch das künstliche System eine Analyse vorgenommen wird, reduziert sich zusätzlich die benötigte Zeit eines Bedieners zur Interpretation der Fehlerstellen. Ferner wird gerade dadurch, dass der Trainingsdatensatz laufend mit weiteren Trainingsdaten erweitert wird, die Analyse des künstlichen Systems kontinuierlich verbessert. Entsprechend kann mit der Zeit auch ein Bediener mit weniger Erfahrung die Interpretation von Fehlerstellen durchführen. Denn dadurch können die Aufnahmen derart angepasst werden, dass diese sich besonders für die weiteren Verfahrensschritte eignen. Schließlich kann das trainierte System die Analyse und Kategorisierung selbstständig durchführen, so dass beispielsweise das Aussortieren schadhafter Reifen vollautomatisch und ohne einen Bediener durchgeführt werden kann.

Zur Durchführung des erfindungsgemäßen Verfahrens kann eine Prüfvorrichtung, wie nachfolgend beschrieben, verwendet werden. Der Prozessor und das Speichermedium kann integraler Bestandteil der Prüfvorrichtung sein, kann aber auch ein zentral angeordneter Rechner sein, der lediglich zum Übermitteln von Daten über eine Funkverbindung mit der Prüfvorrichtung gekoppelt ist. Ein zentraler Rechner weist den Vorteil auf, dass mehrere Prüfvorrichtungen Daten, wie beispielsweise die Aufnahmen, an den zentralen Rechner übermitteln und dieser somit einen großen Datensatz, der insbesondere auch als Trainingsdatensatz gespeichert wird, leichter aufbauen kann. Ferner kann dieser zentrale Rechner mit einer besonders hohen Rechenleistung ausgestattet sein.

Ergebnisdaten können Ergebnisbilder sein, aber auch Ergebnisbilder mit einer zusätzlichen versehenen Information zu dem Ergebnisbild.

Unter Reifen ist ein Reifen eines Fahrzeugs, wie beispielsweise eines Automobils, eines Arbeitsfahrzeugs oder eines Flugzeugs, oder ein vergleichbares rotationssymetrisches Objekt zu verstehen.

Unter Aufnahme ist beispielsweise ein Messergebnis zu verstehen, das aus Einzelbildern einer Kamera erstellt wird. Die Kamera ist vorzugsweise zur Durchführung einer interferometrischen Prüfung geeignet. Beispielsweise werden zur Erzeugung eines Phasenbilds für eine interferometrischen Prüfung mehrere Einzelbilder gemacht.

In einer vorteilhaften Ausgestaltung ist die Aufnahme ein Phasenbild und/oder ein Videobild. Ein Phasenbild wird gewöhnlich in Kombination mit einer kohärenten Lichtquelle bei einer interferometrischen Prüfung aufgenommen. Das Phasenbild eignet sich besonders zur Bestimmung und Kategorisierung einer Fehlerstelle. Ein Videobild wird bevorzugt in Kombination mit einer nicht kohärenten Beleuchtung aufgenommen, um die bei einer kohärenten Beleuchtung auftretende Specklebildung zu vermeiden. Das Videobild eignet sich hierdurch besonders für die Bestimmung und Kategorisierung einer nicht relevanten Anomalie.

Des Weiteren kann in einer vorteilhaften Weiterbildung ein mit dem Phasenbild korrespondierendes Kontrastbild berechnet werden. Das Kontrastbild gibt für jeden Bildpunkt des Phasenbildes die Qualität, insbesondere den Kontrast, des berechneten Phasenwertes an. Es wird mit Vorteil aus den zur Erzeugung des Phasenbildes verwendeten Einzelbildern gewonnen. Ein hoher Kontrast ist gekennzeichnet durch eine große Amplitude der Phasenmodulation. Ist der Kontrast zu klein, so werden zweckmäßigerweise die betreffenden Bildpunkte aus dem Phasenbild eliminiert. Diese Elimination der betreffenden Bildpunkte kann beispielsweise dadurch erreicht werden, dass die Phasenwerte die Bildpunkte ersetzt werden durch Phasenwerte von umgebenden Bildpunkten.

Eingangsdaten können lediglich durch eine einzelne Aufnahme gebildet werden. Es ist jedoch bevorzugt, dass die Eingangsdaten eine Abbildung, die aus mehreren Aufnahmen besteht und zumindest einen Teilbereich des Reifens, insbesondere einen Sektor des Reifens, umfassen. Eine Abbildung kann sich beispielsweise aus zwei Aufnahmen zusammensetzen, die verschiedene Sektoren des Reifens erfassen. Bevorzugt ist es jedoch, dass der gesamte Umfang des Reifens durch insbesondere mehrere Aufnahmen erfasst wird. Die einzelnen Aufnahmen können zuvor bearbeitet werden, sodass diese einzelnen Aufnahmen zu einer Abbildung zusammengesetzt werden können. Beispielsweise bietet sich dieses gerade für den Bereich der Wulst und der Seitenwand an, da diese meist eine nahezu symmetrische ringsektorförmige Aufnahme des Teilbereichs des Reifens darstellen. Die symmetrische ringsektorförmige Aufnahme wird dabei derart transformiert, dass diese am Ende ein Rechteck darstellt. Hierzu wird beispielsweise die kürzere Grundseite gedehnt und die längere Grundseite gestaucht, bis die Grundseiten gleich lang sind und somit das Rechteck entsteht. Entsprechend verzerren sich die Bereiche innerhalb der Aufnahme.

Unter Analysieren ist zu verstehen, dass die Eingangsdaten dahingehend untersucht werden, ob eine Fehlerstelle vorhanden ist.

Unter Bestimmen ist zu verstehen, dass eine Fehlerstelle identifiziert wird.

Unter Kategorisieren ist zu verstehen, dass die identifizierte Fehlerstelle mit einer Bewertung versehen werden, ob ein Bereich, der die Fehlerstelle umfasst, als kritischer Bereich oder als unkritischer Bereich anzusehen ist.

Unter kritischer Bereich ist ein Bereich zu verstehen, der eine relevante Fehlerstelle aufweist. Eine relevante Fehlerstelle ist beispielsweise ein Lufteinschluss oder ein Riss in dem Reifen, der zu einer kurzen Lebensdauer des Reifens führen kann.

Unter unkritischer Bereich ist ein Bereich zu verstehen, der keine Fehlerstelle aufweist oder eine als Fehlerstelle erkannte Stelle, die jedoch beispielsweise lediglich einen Lufteinschluss darstellt, welcher zu keiner reduzierten Lebensdauer des Reifens oder zu keiner nennenswerten Verkürzung der Lebensdauer außerhalb der spezifizierten Lebensdauer des Reifens führt.

Ein unkritischer Bereich kann in einer vorteilhaften Ausgestaltung des Verfahrens auch eine als Fehlerstelle identifizierte Stelle darstellen, die lediglich eine nicht relevante Anomalie ist. Eine nicht relevante Anomalie ist beispielsweise eine irrelevante Verformung der Oberfläche des Reifens, die durch eine Reparaturstelle, ein Reparaturpflaster, ein Auswuchtpflaster, ein RFID- oder einen Drucksensor hervorgerufen wird.

Wie zuvor beschrieben, wird in der erfindungsgemäßen Ausgestaltung des Verfahrens der die nicht relevante Anomalie umfassende Bereich, also der unkritische Bereich, in den Ergebnisdaten entfernt beziehungsweise nicht berücksichtigt. Das Entfernen kann das Einfügen einer Leerstelle in dem herausgenommenen Bereich umfassen. Die bereinigten Ergebnisdaten eignen sich danach besonders als Trainingsdaten.

Vorteilhaft wird zur Erstellung von Eingangsdaten eine Sektorgrenze und/oder eine Begrenzungslinie zu der Aufnahme ermittelt, wobei die Sektorgrenze und/oder die Begrenzungslinie einen definierten Abschnitt der Oberfläche des Reifens begrenzt, wobei die Eingangsdaten den begrenzten und definierten Abschnitt umfassen, und wobei vorzugsweise der außerhalb des definierten Abschnitts liegende Bereich entfernt wird. Die zu verarbeitende Datenmenge wird durch das Zuschneiden reduziert. Zur Identifizierung der Sektorgrenze und oder der Begrenzungslinie eignet sich besonders das Kontrastbild. Ferner ist dieser Schritt vorteilhaft zur Erstellung einer Abbildung aus mehr als einer Aufnahme. Ferner können Überlappungsbereiche vermieden werden, sodass bei einer Zusammenführung von mehreren Aufnahmen zu einer Abbildung keine Bereiche doppelt angezeigt werden.

Vorteilhaft wird zur Erstellung der Abbildung eine Lokalisierungsinformation über die Position einer Kamera in Bezug auf den Reifen zum Zeitpunkt der mittels der Kamera gemachten Aufnahme verwendet. Zweckmäßigerweise werden wenigstens zwei Aufnahmen unter Berücksichtigung von deren jeweiliger Lokalisierungsinformation zu der Abbildung zusammengeführt. Die Lokalisierungsinformation umfasst vorzugsweise den Abstand der Kamera zu dem aufgenommenen Teil der Oberfläche des Reifens und/oder eine Reifengeometrieinformation, insbesondere einen Axialschnitt. Durch die Lokalisierungsinformation kann es ermöglicht werden, den einzelnen Aufnahmen eine genaue Position zuzuordnen, sodass eine lückenlose Abbildung des Reifens erstellt werden kann, die aus einer Vielzahl an Aufnahmen besteht.

In einer weiteren vorteilhaften Ausgestaltung wird aus der Lokalisierungsinformation eine funktionale Gliederung des Reifens abgeleitet, wobei vorzugsweise die funktionale Gliederung wenigstens einen, insbesondere zwei oder vorzugsweise drei, der folgenden Teilbereiche des Reifens aufweist: Innerer erster Wulst, äußerer erster Wulst, innere erste Seitenwand, äußere erste Seitenwand, innere obere Schulter äußere obere Schulter, Lauffläche, innerer zweiter Wulst, äußerer zweiter Wulst, innere zweite Seitenwand, äußere zweite Seitenwand, innere untere Schulter, äußere untere Schulter. Hierdurch kann dem einzelnen Abschnitt zusätzlich eine funktionale Information gegeben werden. Dies ist besonders für die nachfolgend beschriebene Gewichtung vorteilhaft, da Fehlerstellen in sensiblen Bereichen, wie beispielsweise der Lauffläche, zu Fehlerstellen in weniger sensiblen Bereichen, wie etwa der Seitenwand, differenziert werden können.

Ferner kann in einer vorteilhaften Weise die Abbildung auf Basis der Lokalisierungsinformation normiert werden. Zweckmäßigerweise werden hierbei die Größe und/oder die Auflösung der Abbildung auf einen Referenzmaßstab skaliert. Die Skalierung nutzt hierzu insbesondere die Informationen umfassend den Abstand und die Ausrichtung der Kamera zu dem aufzunehmenden Bereich. Folglich sind somit die reale Größe des durch ein Pixel erfassten Bereichs und auch die Größe des Reifens bekannt. Entsprechend kann die Abbildung auf eine normierte Größe skaliert werden, sodass vorzugsweise alle Eingangsdaten und/oder Ergebnisdaten die gleiche Referenzgröße und/oder Auflösung und/oder Maßstab aufweisen. Da der Trainingsdatensatz dann entsprechend aus einheitlich skalierten Trainingsdaten besteht, können diese anschließend universell für diverse Kamerabstände und Abbildungsmaßstäbe verwendet werden. Die Menge an Trainingsdaten, die notwendig ist, um eine möglichst genaue Analyse von unterschiedlichen Reifengrößen durchführen zu können, wird somit deutlich reduziert.

Vorteilhaft werden bei der Verwendung von einer Vielzahl an Phasenbildern die Phasenwerte normiert, insbesondere bildpunktweise auf einen einheitlichen Referenzmaßstab skaliert. Hierdurch sind die Phasenwerte auch bei unterschiedlichen Reifengrößen und/oder Messabständen direkt und ohne zusätzliche Verarbeitungsschritte vergleichbar.

Vorteilhaft werden die Phasenbilder vor der Normierung, insbesondere Skalierung, demoduliert. Eine Demodulation im Bereich der Shearographie ist beispielsweise aus DE 196 39 213 A1 bekannt. Hierdurch ist eine Neuskalierung eines Phasenbildes einfach und zuverlässig durchführbar.

Um eine in der Regel fehleranfällige Demodulation zu vermeiden, wird in einer vorteilhaften Weise in Schritt a) zur Erstellung eines Phasenbildes zwischen zwei unterschiedlichen Belastungszuständen des Reifens eine Vielzahl an Zwischenaufnahmen zur Berechnung des Momentan-Phasenwertes gemacht. Vorteilhafterweise werden anschließend die Phasenwerte von aufeinanderfolgenden Zwischenaufnahmen paarweise subtrahiert und die so erhaltenen Differenzwerte aufsummiert. Durch eine genügend große Anzahl an Zwischenaufnahmen wird sichergestellt, dass sich die Belastungsänderung zwischen zwei aufeinanderfolgenden Zwischenaufnahmen zuverlässig innerhalb einer Ordnung befindet, und zwar auch dann, wenn die gesamte Belastungsänderung mehr als eine interferometrische Ordnung überstreicht. Zur Erfassung der Phasenbilder während des Übergangs von einem ersten auf einen zweiten Belastungszustand, wird mit Vorteil ein räumliches Phasenshiftverfahren verwendet, wie es beispielsweise in DE 39 30 632 A1 beschrieben ist.

Vorteilhaft werden zur Bestimmung und/oder Kategorisierung des kritischen Bereichs und/oder des unkritischen Bereichs in Schritt c) die Eingangsdaten auf Basis der funktionalen Gliederung gewichtet. Wie zuvor beschrieben, ist eine Fehlerstelle in einem sensiblen Bereich wie der Lauffläche relevanter als in der Seitenwand. Entsprechend kann durch die funktionale Gliederung der Abbildung eine korrelierende Gewichtung der Fehlerstelle vorgenommen werden, sodass beispielsweise die Schwelle, bei der ein Bereich als kritischer Bereich angesehen wird, früher überschritten wird.

Vorteilhaft wird bei der Bestimmung und/oder Kategorisierung des kritischen Bereichs und/oder des unkritischen Bereichs in Schritt c) die Größe einer Fehlerstelle und/oder die Häufigkeit einer Fehlerstelle und/oder der Abstand zwischen zwei Fehlerstellen berücksichtigt. Oft entsteht ein kritischer Bereich nicht durch eine Fehlerstelle alleine sondern durch mehrere Fehlerstellen, die eine bestimmte Nähe zueinander aufweisen. Es ist aber auch möglich, dass die Größe einer einzelnen Fehlerstelle bestimmt, ob es sich um einen kritischen Bereich handelt, der eine verkürzte Lebensdauer des Reifens im Betrieb verursachen kann.

Vorteilhaft werden die Ergebnisdaten gemäß Schritt d) in wenigstens zwei Ergebnisdatensätze gespeichert. Zweckmäßigerweise werden die Ergebnisdatensätze den sich durch die funktionale Gliederung ergebende Teilbereiche des Reifens zugeordnet. Dies weist den Vorteil auf, dass die Ergebnisdatensätze kleiner sind als die Ergebnisdaten, da sie sich jeweils nur auf einen Teilbereich des Reifens beziehen. Ferner können die separat gespeicherten Ergebnisdatensätze auch unabhängig voneinander ausgewertet werden. Ferner werden somit durch die separat gespeicherten Ergebnisdaten diese ebenfalls in separate Trainingsdatensätze gespeichert.

Vorteilhaft werden die Eingangsdaten und/oder die Ergebnisdaten auf einer Anzeigeeinheit angezeigt. Zweckmäßigerweise wird der kritische Bereich hervorgehoben. Der Bediener kann somit die Analyse prüfen. Ferner kann der Bediener Korrekturen vornehmen. Die Korrekturen werden ebenfalls in den Trainingsdaten übernommen, sodass mit der Zeit der Bediener weniger Korrekturen vornehmen muss und das künstliche System zuverlässig zwischen kritischen und unkritischen Bereichen unterscheidet. Es ist hierbei besonders bevorzugt, dass die kritischen Bereiche in der Anzeige hervorgehoben werden. Der Bediener kann somit die relevanten Bereiche schneller auffinden. Ist das Trainieren des Systems abgeschlossen, so erfordert die Analyse und Kategorisierung der Eingangsdaten durch das künstliche System keiner Kontrolle durch den Bediener mehr und kann vielmehr selbständig die Prüfung durchführen. Es werden dann auch keine weiteren Trainingsdaten erzeugt und benötigt.

Ein weiterer Aspekt der Erfindung betrifft ein System zur Datenverarbeitung, umfassend Mittel zur Ausführung der Schritte des zuvor beschriebenen Verfahrens. Die Mittel umfassen: Mittel umfassen: eine Prüfkammer mit einer Kamera zum Erzeugen einer Aufnahme von zumindest einem Teilbereich der Oberfläche des Reifens; einen Prozessor zum Erstellen von Eingangsdaten, welche eine aus mindestens einer Aufnahme bestehenden Abbildung umfasst, und zum Analysieren der Eingangsdaten zur Bestimmung und Kategorisierung eines kritischen Bereichs, der eine relevante Fehlerstelle umfasst, und eines unkritischen Bereichs, der eine nicht relevante Anomalie umfasst; und ein Speichermedium zum Speichern der analysierten Abbildung als um den unkritischen Bereich bereinigte Ergebnisdaten und der bereinigten Ergebnisdaten als Trainingsdaten in dem Trainingsdatensatz.

Ein weiterer Aspekt der Erfindung betrifft ein Computerprogrammprodukt, umfassend Befehle, die bei der Ausführung des Programms durch einen Computer diesen veranlassen, die Schritte des zuvor beschriebenen Verfahrens auszuführen.

Ein weiterer Aspekt der Erfindung betrifft ein computerlesbares Speichermedium auf dem das Computerprogrammprodukt gespeichert ist.

Ein weiterer Aspekt der Erfindung betrifft eine Prüfvorrichtung zum Prüfen eines Reifens mittels eines Verfahrens wie zuvor beschrieben. Die Prüfvorrichtung umfasst eine Kamera zum Erzeugen einer Aufnahme von zumindest einem Teilbereich der Oberfläche des Reifens; einen Prozessor zum Erstellen von Eingangsdaten, welche eine aus mindestens einer Aufnahme bestehenden Abbildung umfasst, und zum Analysieren der Eingangsdaten zur Bestimmung und Kategorisierung eines kritischen Bereichs und eines unkritischen Bereichs, wobei ein kritischer Bereich eine relevante Fehlerstelle umfasst; und ein Speichermedium zum Speichern der analysierten Abbildung als um den unkritischen Bereich bereinigte Ergebnisdaten und der bereinigten Ergebnisdaten als Trainingsdaten in dem Trainingsdatensatz.

Im Folgenden wird ein Ausführungsbeispiel der Erfindung anhand von Zeichnungen erläutert. In den Zeichnungen zeigen:
Figur 1: Darstellung einer Prüfvorrichtung, die zur Durchführung des erfindungsgemäßen Verfahrens bei einem Reifen geeignet ist;
Figur 2: Anordnung der Prüfabschnitte eines Reifens bei einer sektorweisen Abtastung;
Figur 3: Ausrichtung und Positionierung des Messkopfes zur Prüfung des äußeren Wulstes und der Seitenwand eines Reifens;
Figur 4: Ausrichtung und Positionierung des Messkopfes zur Prüfung des inneren Reifengürtels / der Lauffläche eines Reifens;
Figur 5: Ausrichtung und Positionierung des Messkopfes zur Prüfung des inneren Reifengürtels / der Lauffläche eines Reifens;
Figur 6: Darstellung eines Axialschnitts;
Figur 7: Schematische Darstellung eine Aufnahme vom Wulst- und Seitenwandbereich eines Reifens;
Figur 8: Schematische Darstellung einer Aufnahme von der Innenseite des Reifengürtels / der Lauffläche eines Reifens;
Figur 9: Zusammenstellung der Aufnahmen Wulst zu Wulst und aller Sektoren;
Figur 10: die Gesamtdarstellung aller Einzelsektoren aus Figur 9 nach Transformation der Sektorengrenzen und Grenzlinien in ein gemeinsames Objektkoordinatensystem;
Figuren 11a, 11b, 11c: die Darstellung der Aufnahmen aller Einzelsektoren einer realen Messung an einem LKW-Reifen;
Figur 12: die Darstellung der Abbildung umfassend die Aufnahmen aller Einzelsektoren einer realen Messung an einem LKW-Reifen nach Transformation der Bilddaten in ein gemeinsames Objektkoordinatensystem;
Figur 13: Anlernen eines Deep Learning Moduls (DLM) mittels Abbildungen von Fehlerstellen aus dem Wulstbereich eines Reifens;
Figur 14: Anlernen eines Deep Learning Moduls (DLM) mittels Abbildungen von Fehlerstellen aus der Seitenwand eines Reifens;
Figur 15: Verifikation der Auswertung durch das Deep Learning Modul (DLM) mittels Testdaten aus dem Wulstbereich eines Reifens;
Figur 16: Verifikation der Auswertung durch das Deep Learning Modul (DLM) mittels Testdaten aus der Seitenwand eines Reifens;
Figur 17: Schema der Auswertung von Reifendaten mittels des trainierten Deep Learning Moduls (DLM) und Eintragung der gefundenen Fehlerstellen in die Gesamtdarstellung des Reifens;
Figur 18: die Darstellung gemäß Figur 10 mit den vom Deep Learning Modul gefundenen Fehlerstellen in allen funktionalen Abschnitten des Reifens;
Figur 19: die Darstellung gemäß Figur 18 mit den mittels Bildverarbeitungsfunktionen nachbearbeiteten gefundenen Fehlerstellen,
Figur 20: die Darstellung eines Reifens mit Fehlerstellen in unterschiedlichen Abschnitten des Reifens,
Figur 21: die Darstellung eines weiteren Reifens als interferometrisches Ergebnisbild,
Figur 22: die Darstellung des Reifens gemäß Fig. 21 als Videobild,
Figur 23: die Darstellung eines Reifens gemäß Fig. 22 mit einer vom Deep Learning Modul gefundenen Fehlerstelle, hier eine Reparaturstelle, und
Figur 24: die Darstellung eines Reifens gemäß Fig. 21, wobei die Reparaturstelle eliminiert wurde.

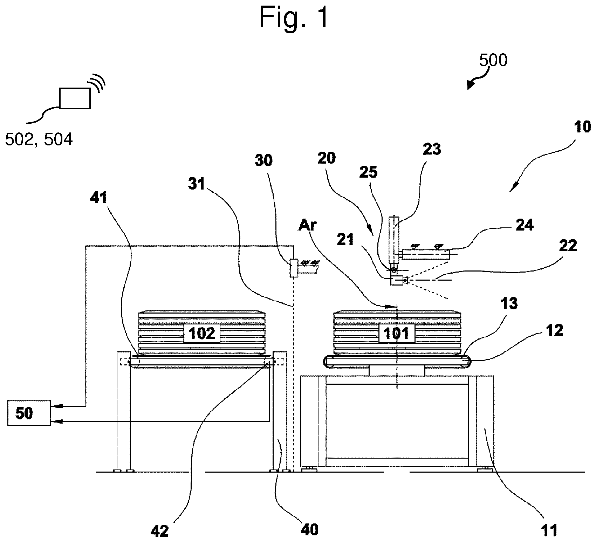

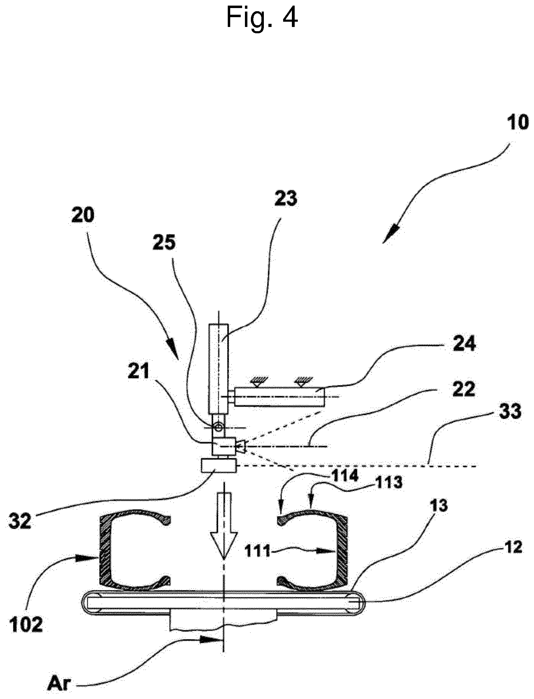

Die Figuren 1 bis 5 zeigen eine Prüfvorrichtung 10 mit einem Reifen 101, 102, das zur Durchführung des erfindungsgemäßen Verfahrens geeignet ist. Die Prüfvorrichtung 10 ist in einem künstlichen System 500 integriert, das einen Prozessor 502 mit einem Speichermedium 504, welcher mit der Prüfvorrichtung 10 in Verbindung steht, aufweist.

Die Prüfvorrichtung 10 weist einen Messkopf 20 mit einer Kamera 21 zur Aufnahme von Aufnahmen 200 auf. Der Messkopf 20 kann über eine Positioniervorrichtung 24, 23 horizontal und vertikal relativ zum zu prüfenden Objekt, dem Reifen 101, 102 verfahren werden. Die horizontale Positioniervorrichtung 24 ist ortsfest mit einem Untergestell 11 verbunden, so dass der Messkopf 20 relativ zu dem Reifen 101, 102 horizontal und vertikal verfahrbar ist. Ferner kann über eine Schwenkachse 25 die Neigung der optischen Achse 22 der Kamera 21 gegenüber dem Reifen 101, 102 verändert werden. Die Prüfvorrichtung 10 verfügt ferner über einen Drehteller 12 zum Drehen des Reifens 101, 102 relativ zum Messkopf 20. Hierdurch wird ein Prüfen des Reifens 101, 102 über seinen gesamten Umfang ermöglicht. Zur geometrischen Erfassung der Reifenkontur, insbesondere zur Erstellung eines Axialschnitts, befindet sich ein in Abstandssensor 30 mit einem senkrecht nach unten gerichteten Laserstrahl 31 zwischen dem Fördermodul 40 und der Prüfvorrichtung 10. Zusätzlich weist die Prüfvorrichtung 10 einen Abstandssensor 32 auf, der unterhalb des Messkopfes 20 montiert ist und beim Hineinfahren des Messkopfes 20 in den Reifen 102 durch das Felgenloch einen Axialschnitt von der Innenseite des Reifens erfasst. Dabei tastet der Laserstrahl 33 des Sensors 32 zunächst die obere Seitenwand 113 des Reifens 102 ab, dann die Innenseite des Wulstes 114 und zuletzt den Laufstreifen des Reifens 102 von der Innenseite.

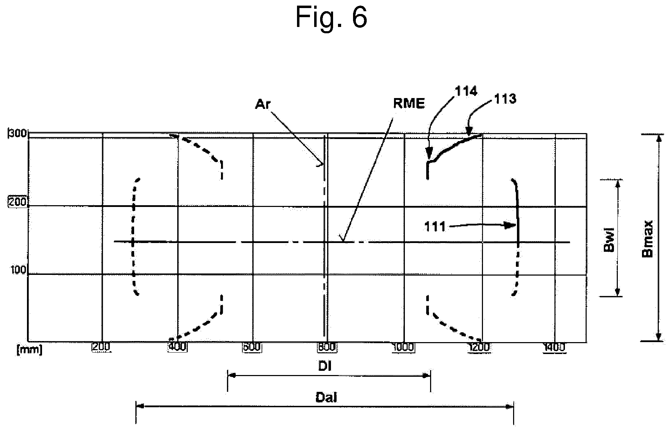

Die beiden ermittelten Axialschnitt des Reifens 101, 102 werden zu einem Axialschnitt zusammengesetzt, wie in Figur 6 gezeigt. Die durchgezogene Linie ist dabei die tatsächlich messtechnisch erfasste Konturlinie, wohingegen die gestrichelten Anteile der Konturlinie durch Spiegelung berechnet werden. Die unterhalb der Reifenmittenebene RME liegende Hälfte des äußeren Axialschnittes wurde durch rechnerische Spiegelung der oberen Hälfte des äußeren Axialschnittes an der Reifenmittenebene RME erzeugt. Ferner wurde die Konturlinie um die Rotationsachse Ar gespiegelt und berechnet, sodass der Axialschnitt die Konturlinie des Reifens 101, 102 wiedergibt. Die kombinierten Axialschnitte ergeben ein genaueres Modell des Reifens 101, 102. Hierdurch kann die Berechnung der Raumkoordinaten von abgebildeten Punkten der Oberfläche des Prüfobjekts mit größerer Genauigkeit durchgeführt werden. Ferner stellt der Axialschnitt eine exakte Informationsquelle dar, die als Lokalisierungsinformation genutzt werden kann.

Ferner wird der Axialschnitt nach der Prüfung des Reifens 101, 102 für das Übertragen der Messdaten in ein Objektkoordinatensystem verwendet.

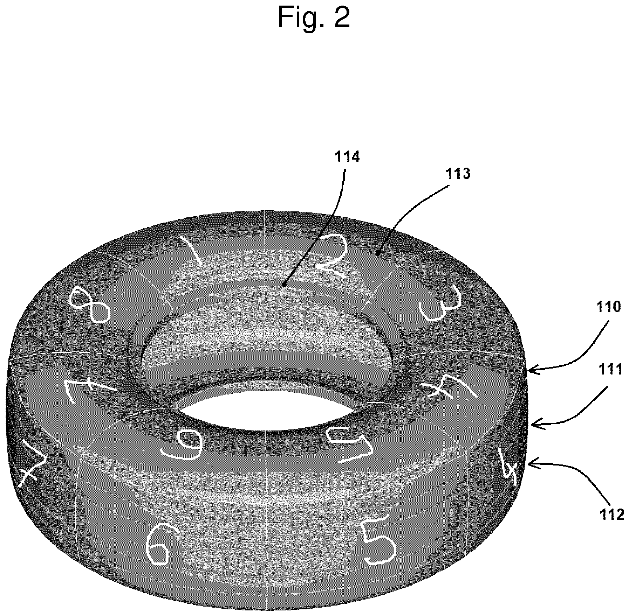

Die Figur 2 zeigt die schematische Anordnung der Prüfsektoren bei der Prüfung eines Reifens 101, 102 mit acht Sektoren im Wulst- und Seitenwandbereich 113, 114, 115, 116 und acht Sektoren im Bereich der Lauffläche 111 und der Schultern 110, 112 des Reifens 101, 102. In der Praxis kann, etwa in Abhängigkeit von der Form und der Größe des Reifens 101, 102 oder des Gesichtsfelds 130 des Messkopfes 20, eine hiervon nach oben oder unten abweichende Sektorenzahl erforderlich sein und/oder verwendet werden.

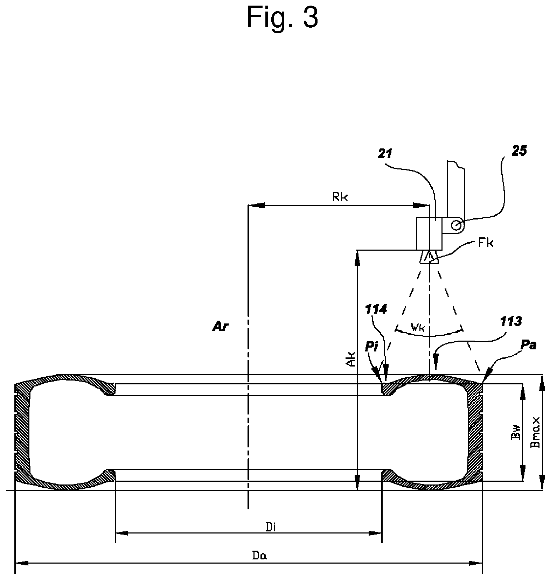

Die Figur 3 zeigt den schematischen Aufbau einer Prüfvorrichtung 10 mit der typischen Ausrichtung des Messkopfes 20 zur Prüfung der Außenseite von Wulst 114, 116 und Seitenwand 113, 115 des Reifens 101, 102. Die Kamera 21 des optischen Messkopfes 20 blickt dabei senkrecht beziehungsweise in axialer Richtung auf die Seitenwand 113 des Reifens 101, 102.

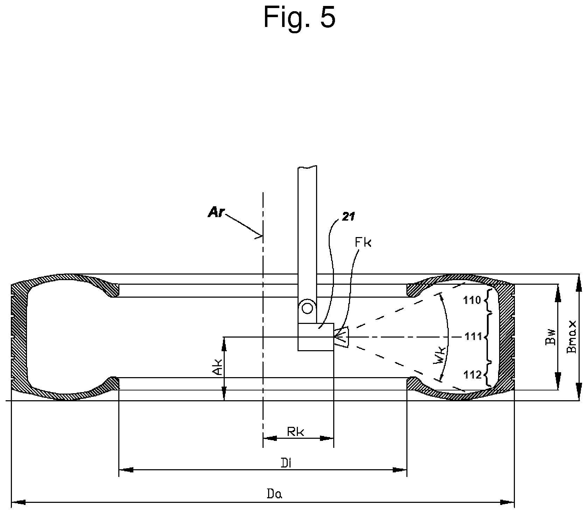

Die Figur 5 zeigt den schematischen Aufbau einer Prüfvorrichtung 10 mit der typischen Ausrichtung des Messkopfes 20 zur Prüfung des Laufflächenbereiches des Reifens 101, 102 von der Innenseite. Es werden die beiden Schultern 110, 112 und die Laufstreifenmitte 111 des Reifens 101, 102 erfasst.

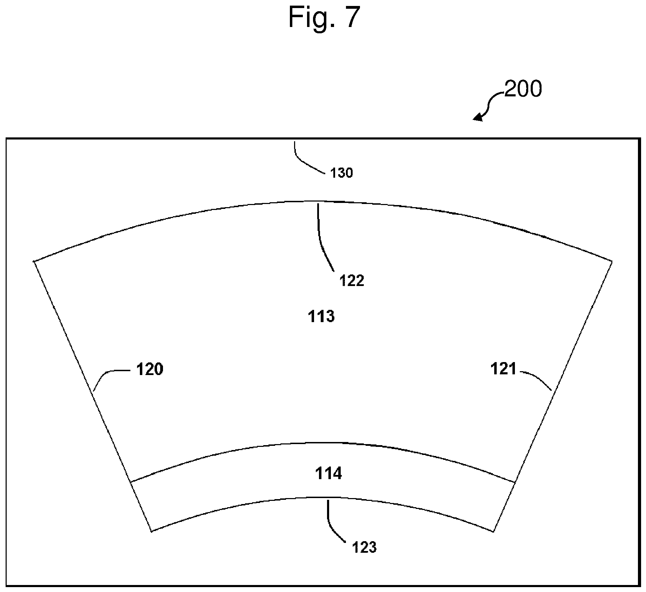

Die Figur 7 zeigt die schematische Darstellung einer Aufnahme 200 vom Wulst- und Seitenwandbereich 113, 114 des Reifens 101, 102 innerhalb der Begrenzung des Gesichtsfelds 130. Der für die weiteren Verarbeitungsschritte relevante Bereich liegt innerhalb der Sektorgrenzen 120, 121 und der in radialer Richtung des Reifens 101, 102 inneren und äußeren Begrenzungslinie 123 und 122. Das Gesichtsfeld 130 wird durch die Optik der Kamera und dem Abstand zu der erfassten Oberfläche bestimmt. Nach der Bearbeitung der Aufnahme 200 weisen die Eingangsdaten 210 in einer bevorzugten Ausgestaltung des Verfahrens lediglich den durch die Sektorgrenzen 120, 121 und Begrenzungslinien 123, 122 umschlossenen Bereich auf.

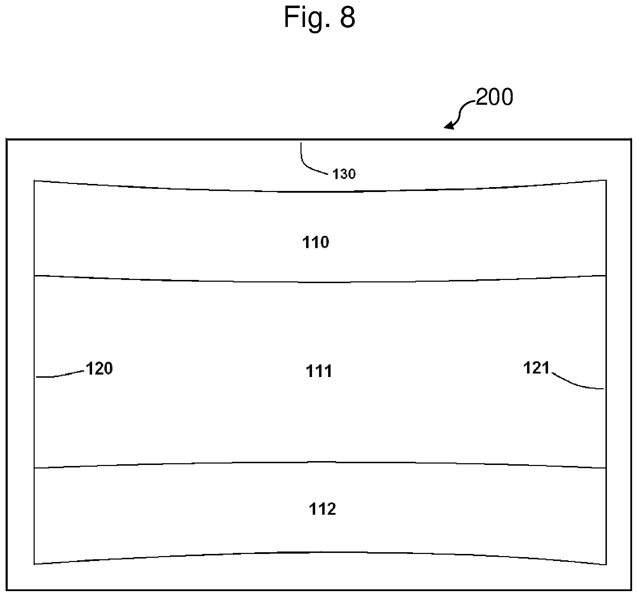

Die Figur 8 zeigt die schematische Darstellung einer Aufnahme 200 von der Innenseite des Reifengürtels beziehungsweise der Lauffläche 110, 111, 112 des Reifens 101, 102. Innerhalb der Begrenzung des Gesichtsfelds 130 liegt der für die weiteren Verarbeitungsschritte relevante Bereich innerhalb der Sektorgrenzen 120 und 121.

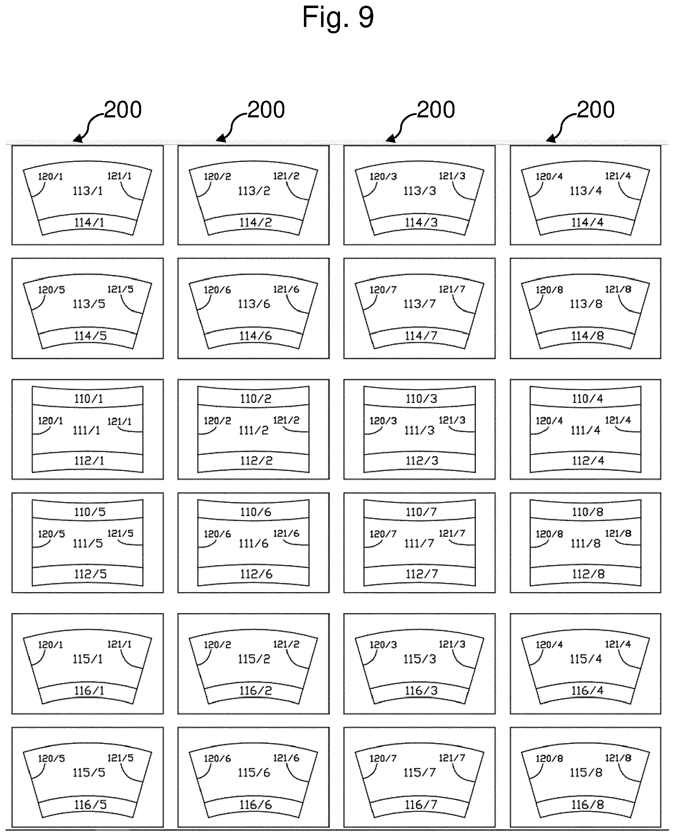

Die Figur 9 zeigt die schematische Zusammenstellung der Aufnahmen 200 Wulst zu Wulst und aller Sektoren. Die Prüfung wurde für beide Seitenwände 113, 115 des Reifens 101, 102 und für den Laufflächenbereich 110, 111, 112 des Reifens 101, 102 mit jeweils acht Sektoren gemäß Figur 2 durchgeführt. Hieran ist zu erkennen, dass bei einer reinen Aufreihung der Aufnahmen 200 keine lückenlose Abbildung 205 erstellt werden kann.

Die Figur 9 zeigt die Gesamtdarstellung aller Einzelsektoren gemäß Figur 8 nach Transformation der Sektorengrenzen und Grenzlinien in ein gemeinsames Objektkoordinatensystem. Alle in den Aufnahmen 200 gezeigten Teilbereiche der Oberfläche des Reifens innerhalb der Sektorengrenzen finden sich in einer lagerichtigen Position zueinander wieder. Außerhalb der Sektoren- und der Reifenbereiche liegende Bildpunkte sind eliminiert, so dass sich eine übersichtliche Darstellung der gesamten Reifenoberfläche ergibt. Hierzu werden ferner die Abschnitte des Reifens derart skaliert, sodass der von den Sektorgrenzen und Begrenzungslinien umschlossene Sektor eine rechteckige Form aufweist. Entsprechend muss hierzu beispielsweise die annährend trapezartige Form des umschlossenen Bereichs bereichsweise gestreckt werden, sodass die einzelnen Bereiche zu einer gesamthaften rechteckigen Abbildung des Reifens zusammen gefügt werden können. Diese bildhafte Darstellung der Prüfergebnisse wird als Gesamtbild oder in mehrere Teilbereiche aufgeteilt einem künstlichen System, insbesondere einem Deep Learning Modul, zur Auswertung zugeführt.

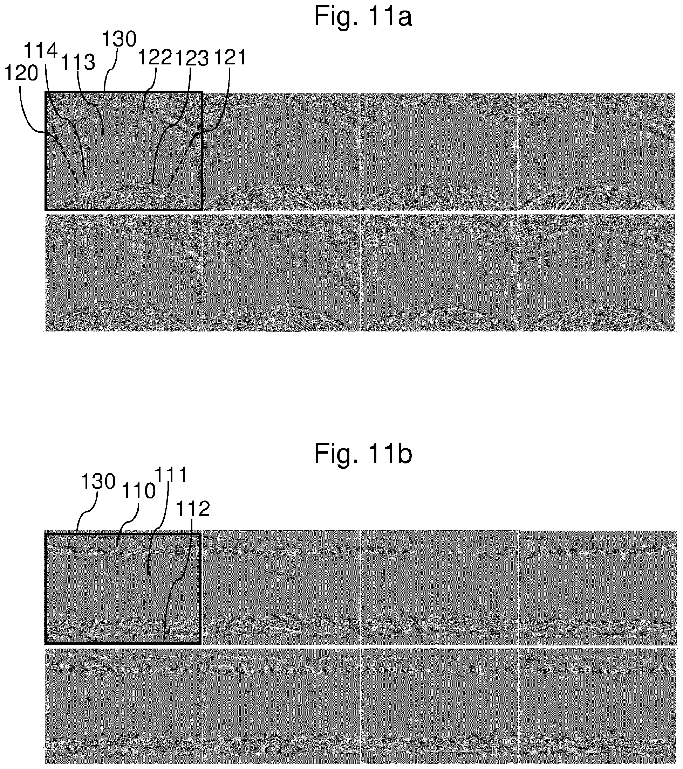

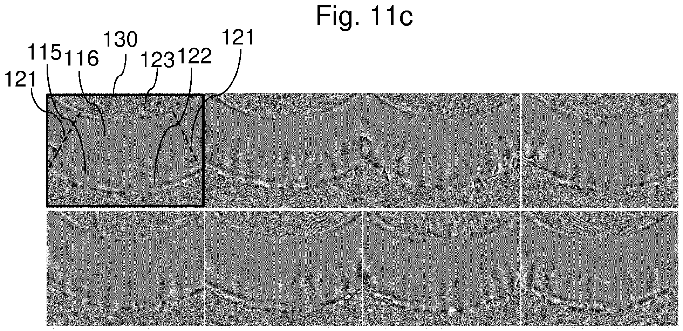

Die Figuren 11a bis 11c zeigen die Zusammenstellung aller Aufnahmen 200 einer Wulst zu Wulst Prüfung an einem LKW-Reifen. Die Aufnahmen 200 von der Außenseite der ersten Seitenwand 113 sind in Figur 11a gezeigt. Die Aufnahmen 200 von der Innenseite des Laufstreifens 110, 111, 112 sind in Figur 11b dargestellt. Die Aufnahmen 200 von der Außenseite der zweiten Seitenwand 115 sind in der Figur 11c dargestellt. Die Bilder des Laufstreifens 110, 111, 112 in Figur 11b zeigen Gürtelkantenlösungen in der oberen und unteren Reifenschulter 110, 112, die sich über mehrere Sektoren erstrecken.

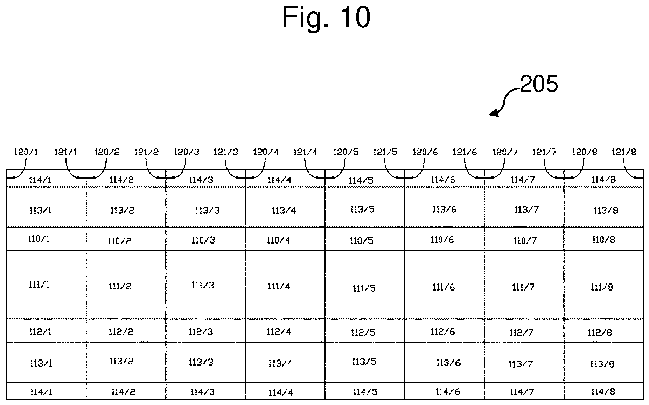

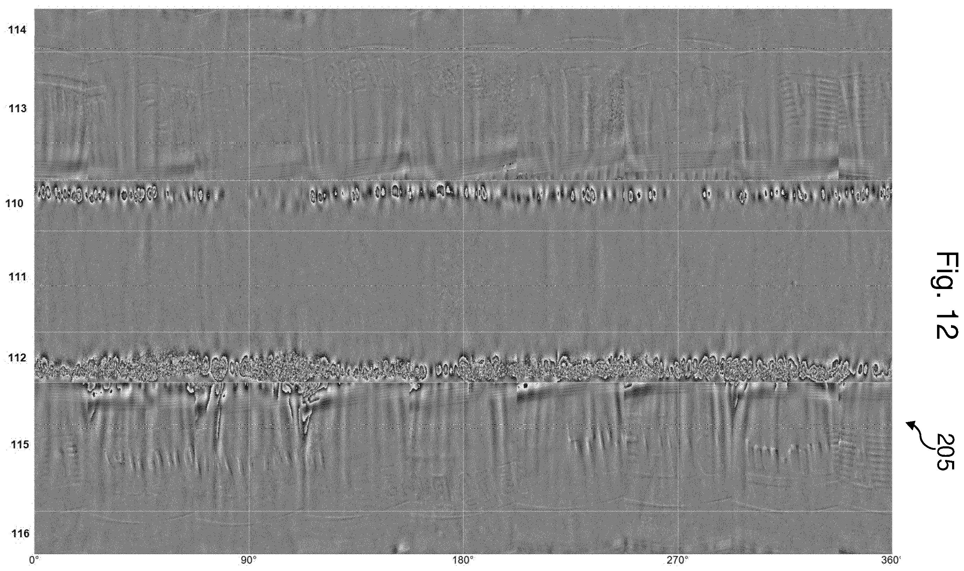

Die Figur 12 zeigt die Darstellung aller Einzelsektoren einer realen Messung an einem LKW-Reifen nach Transformation der Bilddaten in ein gemeinsames Objektkoordinatensystem vergleichbar zu der schematischen Darstellung in Figur 10. Die Gürtelkantenlösungen in den Schulterbereichen 110, 112 sind sektorübergreifend zusammengefügt und so in ihrer wahren Ausdehnung in Umfangsrichtung erkennbar. Gut erkennbar ist nun auch die stellenweise Ausdehnung der Gürtelkantenlösungen in die Seitenwandbereiche 11, 115 hinein.

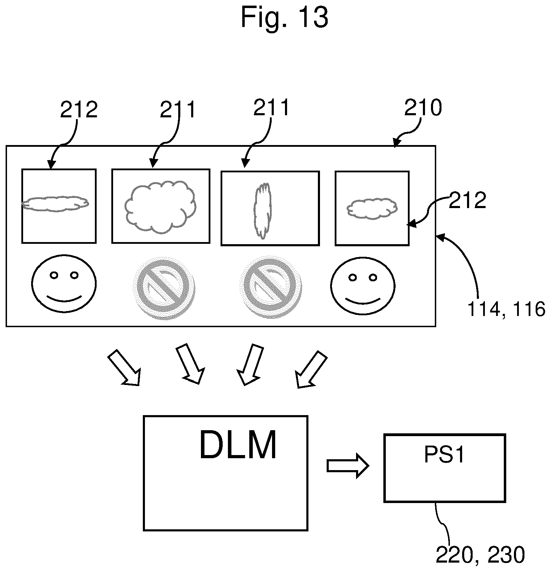

Die Figur 13 zeigt schematisch das Anlernen eines Deep Learning Moduls (DLM) mittels Abbildungen 205 von Fehlerstellen aus dem Wulstbereich 114, 116 eines Reifens 101, 102. Fehlerstellen mit überwiegend radialer Ausrichtung oder signifikanter Ausdehnung in Umfangsrichtung und radialer Richtung werden als Trainingsdaten für aufzufindende Fehlerstellen verwendet. Fehlerstellen, die hingegen nur eine signifikante Ausdehnung in Umfangsrichtung besitzen, werden als Negativbeispiele zum Zwecke des sogenannten Negative Minings verwendet, da diese in der Regel lediglich Artefakte an der Sichtkante des Wulstes 113, 116 darstellen. Die vom Deep Learning Modul DLM ermittelten Parameter beziehungsweise Parametergewichtungen werden in einem ersten Parametersatz PS1 zur weiteren Verwendung, die beispielsweise als Trainingsdaten verwendet werden können, abgelegt.

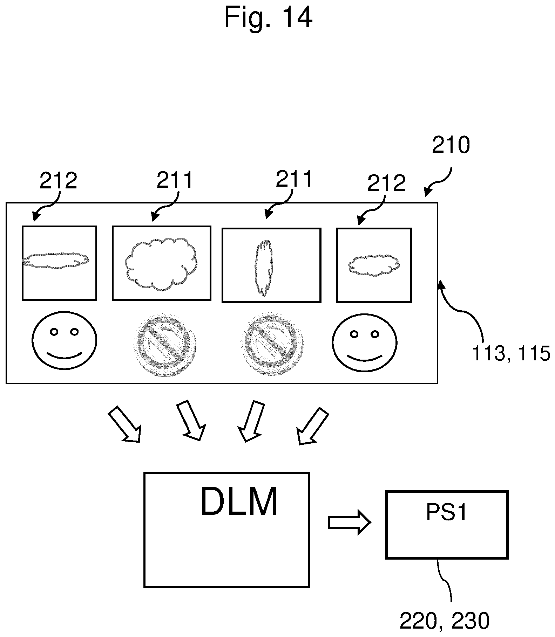

Die Figur 14 zeigt das Anlernen eines Deep Learning Moduls DLM mittels Abbildungen von Fehlerstellen aus der Seitenwand 113, 115 eines Reifens 101, 102. Es werden wiederum aufzufindende Fehlerstellen als Trainingsdaten verwendet. Irrelevante Artefakte werden als Negativbeispiele verwendet. Die vom Deep Learning Modul DLM ermittelten Parameter beziehungsweise Parametergewichtungen werden in einem zweiten Parametersatz PS2 zur weiteren Verwendung abgelegt.

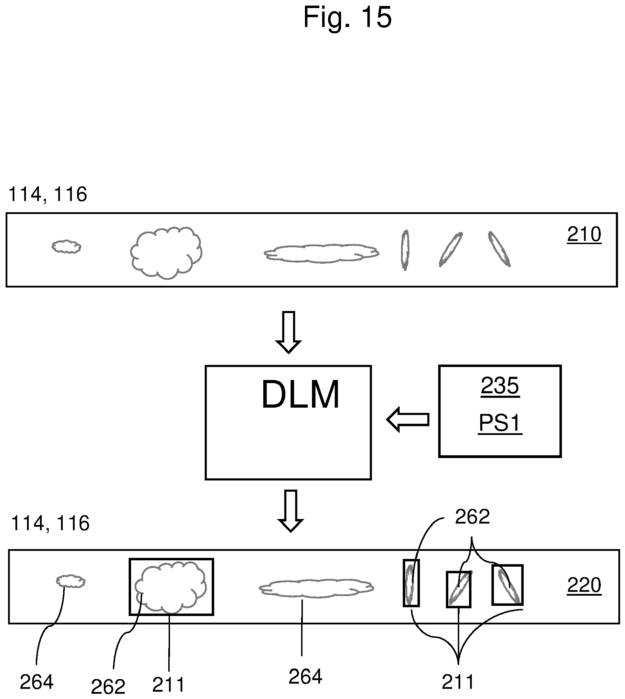

Die Figur 15 zeigt schematisch die Verifikation eines Deep Learning Moduls DLM mittels Testdaten aus dem Wulstbereich 114, 116 eines Reifens 101, 102. Hierzu werden Testdaten aus den Wulstbereichen 114, 116 der Gesamtdarstellung gemäß Figur 10 in Kombination mit dem Parametersatz PS1 verwendet. Das Ergebnis wird gemäß der üblichen Verifikationsstrategie für ein Deep Learning Moduls DLM überprüft.

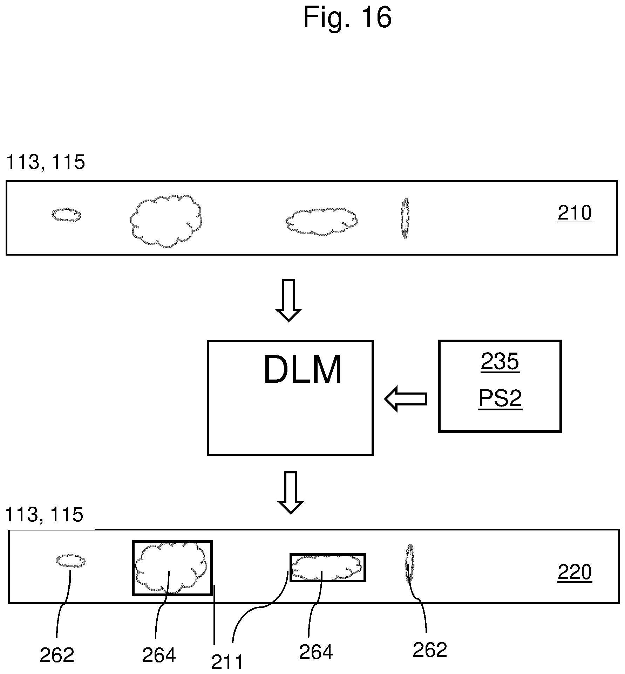

Die Figur 16 zeigt die Verifikation eines Deep Learning Moduls DLM mittels Testdaten aus der Seitenwand 113, 115 eines Reifens 101, 102. Es werden Testdaten aus den Seitenwandbereichen 113, 115 der Gesamtdarstellung gemäß Figur 10 in Kombination mit dem Parametersatz PS2 verwendet.

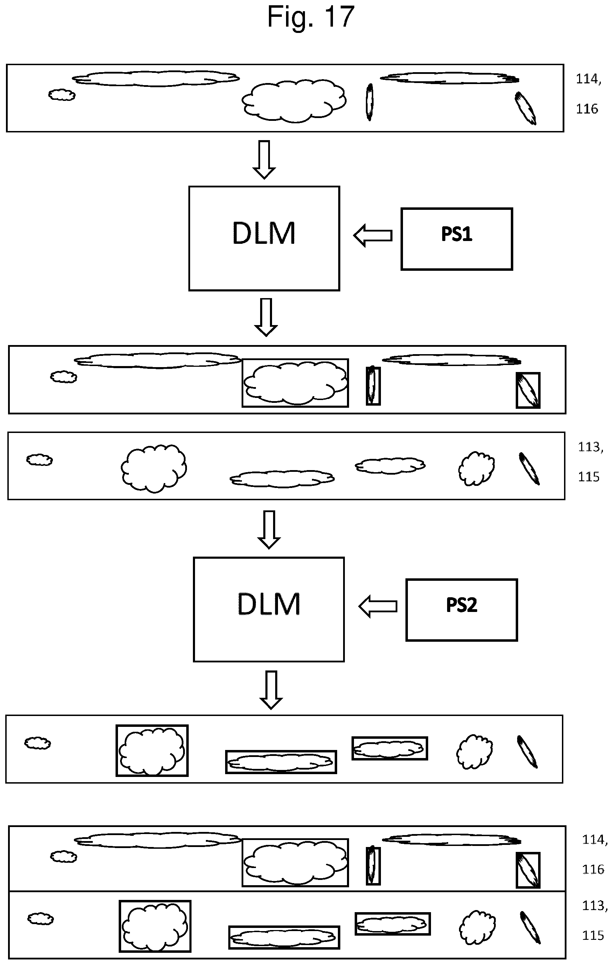

Die Figur 17 zeigt das Schema der Auswertung von Reifendaten mittels des trainierten Deep Learning Moduls DLM und Eintragung der gefundenen Fehlerstellen in die Gesamtdarstellung des Reifens 101, 102. Das Deep Learning Modul DLM liefert die Position und die Grenzlinien der gefundenen Fehlerstellen.

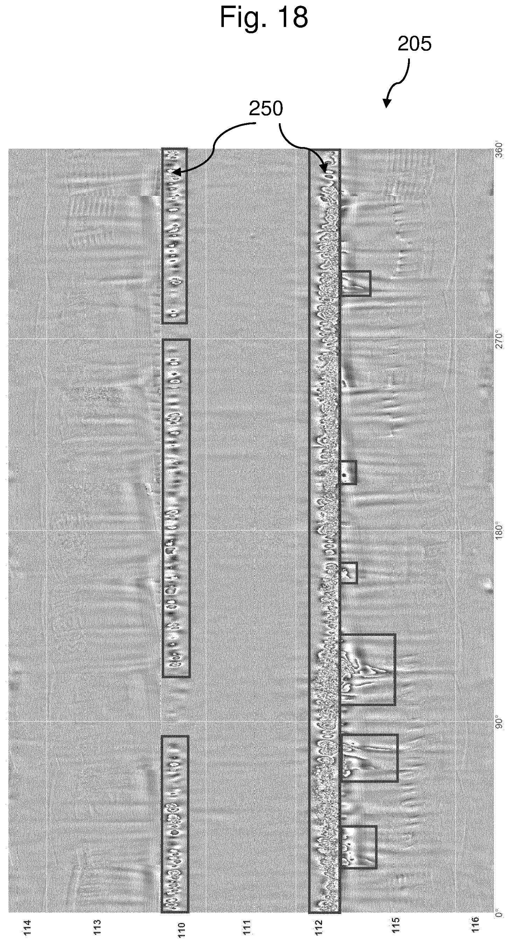

Die Figur 18 zeigt die Darstellung gemäß Figur 12 mit den vom Deep Learning Modul gefundenen Fehlerstellen für alle Bereiche des Reifens. Position und Größe der gefundenen Fehlerstellen sind als Rechtecke eingezeichnet.

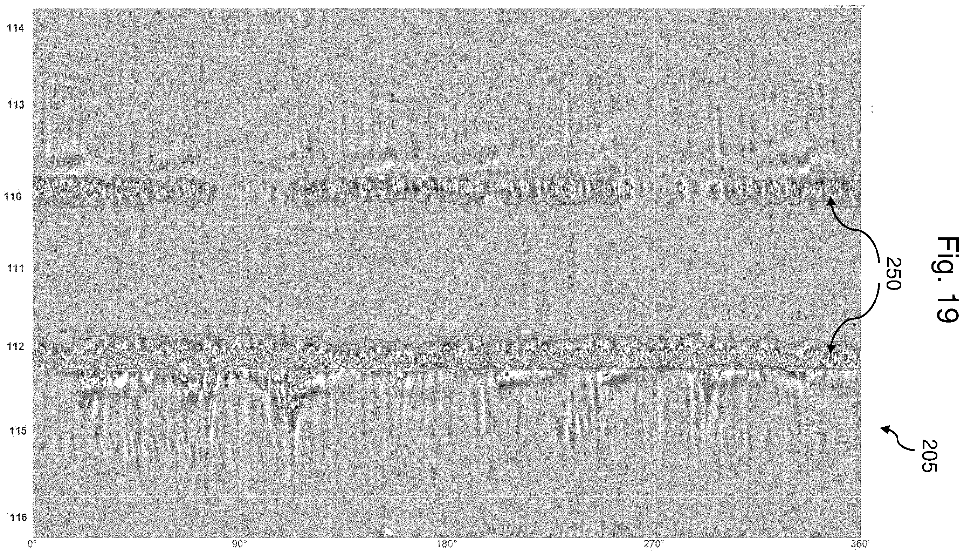

Die Figur 19 zeigt die Darstellung gemäß Figur 18 mit den mittels Bildverarbeitungsfunktionen nachbearbeiteten Konturen der gefundenen Fehlerstellen. Dabei werden sich überlappende Rechtecke zu einer Fehlerstelle zusammengefasst und darin die genaue Kontur der Fehlerstelle ermittelt.

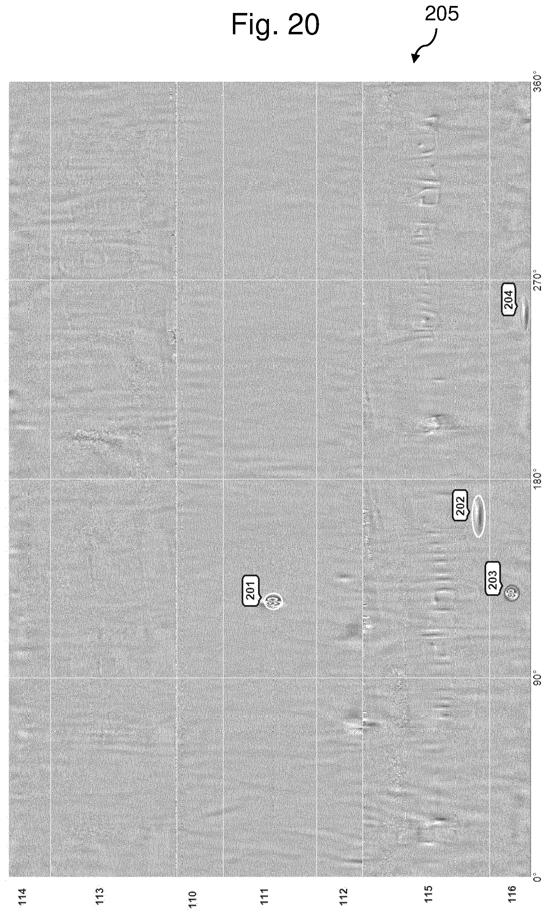

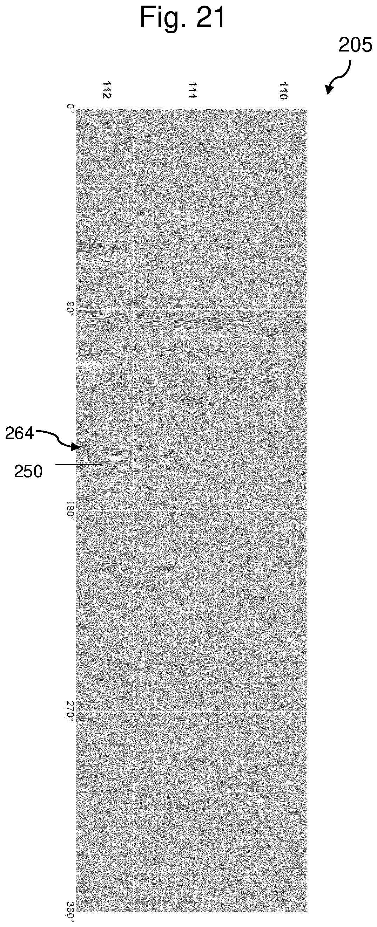

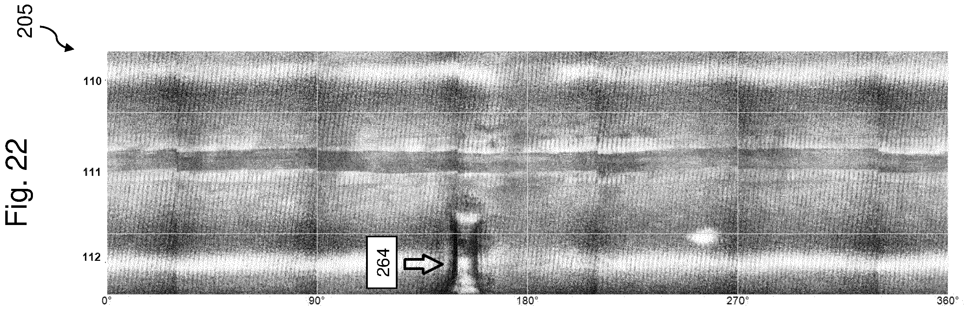

Die Figur 20 zeigt die Darstellung eines Reifens mit Fehlerstellen 201 bis 204 in unterschiedlichen Reifenabschnitten. Je nach Reifenabschnitt werden die Fehlerstellen vom Deep Learning Modul DLM entsprechend den abschnittsspezifischen Parametersätzen unterschiedlich bewertet. Die Fehlerstelle 201 befindet sich im Laufstreifen 111 und ist in dieser Ausdehnung und Form ein geringfügiger Schaden. Die Fehlerstelle 203 hat zwar in etwa dieselbe Größe und Form wie die Fehlerstelle 201, stellt aber einen erheblichen Schaden dar, da sie sich im Bereich des Wulstes 116 befindet. Die Fehlerstelle 204 im Wulst 116 hat eine überwiegende Ausdehnung in horizontaler Richtung und ist deshalb im Wulst 116 unkritisch. Die Fehlerstelle 202 in der Seitenwand 115 ist in Form und Größe vergleichbar mit der Fehlerstelle 204. Da sie im Seitenwandbereich 114 liegt, ist sie aber erheblich. Die Figur 21 zeigt eine weitere beispielhafte Darstellung eines interferometrischen Ergebnisbilds des Laufstreifens eines Reifens, insbesondere eines Fahrzeugreifens, mit den Bereichen obere Schulter 110, Laufstreifenmitte 111, untere Schulter 112. Im dargestellten Ergebnisbild sind vereinzelte kleinere Lufteinschlüsse erkennbar. In der unteren Schulter 112 ist in Umfangsrichtung zwischen 135° und 160° eine Fehlerstelle, die durch ein Reparaturpflaster hervorgerufen wurde, erkennbar. Die Fehlerstelle 250 stellt beispielhaft einen mittels des künstlichen Systems nicht auszuwertenden Bildbereich dar. Weitere derartige nicht auszuwertende Bildbereiche können auch durch eines der im Folgenden nicht abschließend aufgezählten Elementen hervorgerufen werden: Reparaturstellen, Auswuchtpflaster, RFID-Sensor oder Drucksensor. Bei reiner Betrachtung der Abbildung würde dieser Bildbereich einen erheblichen Defekt darstellen. Figur 22 zeigt das zu Figur 21 korrespondierende Videobild in einer analog zu Figur 21 normierten, gesamtumfänglichen Darstellung des Reifens 101, 102. Das dargestellte Videobild wurde mittels einer nicht kohärenten Beleuchtung aufgenommen. Im Bereich zwischen 135° und 160° in Umfangsrichtung ist die Reparaturstelle aufweisend ein Reparaturpflaster deutlicher zu erkennen

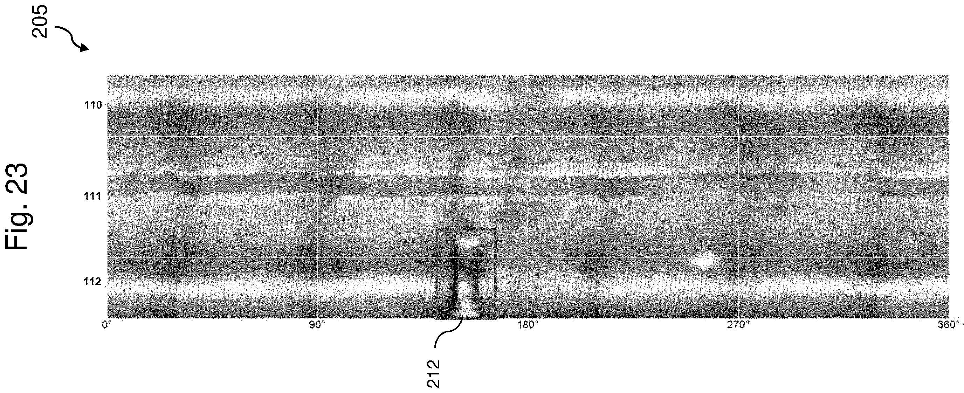

Figur 23 zeigt das Videobild aus Figur 22 mit der mittels eines Deep Learning Moduls ermittelten Position und flächiger Ausdehnung des Reparaturpflasters, das in Figur 23 umrandet dargestellt ist. Dieser Bildbereich wird gemäß einem Aspekt der Erfindung von der weiteren Auswertung des Ergebnisbildes aus Figur 21 ausgenommen, da dieser Bereich ein unkritischer Bereich 212 ist, welcher eine nicht relevante Anomalie umfasst.

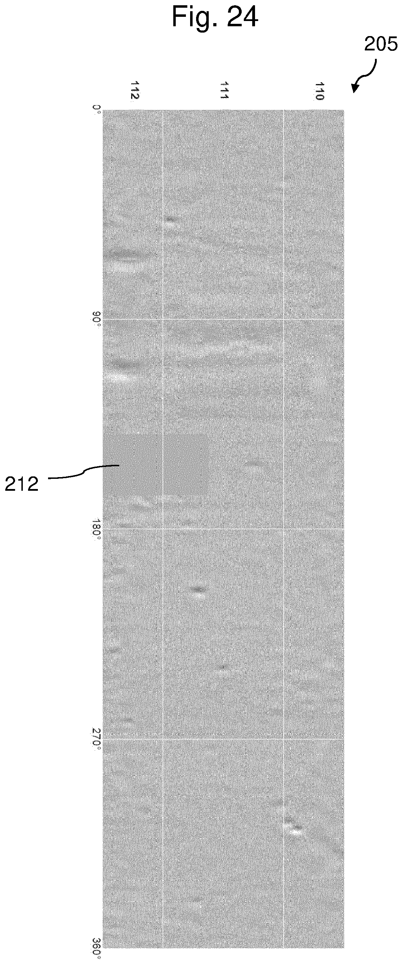

Die Figur 24 zeigt die Eliminierung des nicht auszuwertenden Bildbereiches im Ergebnisbild durch Ersetzen des betreffenden Bildbereiches mit einer Leerstelle. Zusammenfassend wird durch die Prüfvorrichtung 10 und insbesondere mittels der Kamera 21 von jedem Sektor des Reifens 101, 102 eine Aufnahme 200 gemacht. Die Aufnahme 200 wird anschließend bearbeitet und zu einer Abbildung 205 zusammengesetzt. Die Abbildung 205 wird anschließend normiert und zu Eingangsdaten 210 transformiert. Die Eingangsdaten 210 werden auf das Deep Learning Modul DLM geladen. Dort werden die Eingangsdaten 210 analysiert. Bei der Analyse werden Fehlerstellen identifiziert und in kritische Bereiche 211 und unkritische Bereiche 212 kategorisiert. Die analysierten Abbildung 205 als Ergebnisdaten 220, die ein Ergebnisbild sind. Die Ergebnisdaten 220 werden zusätzlich als Trainingsdaten 230 in einem Trainingsdatensatz 235 integriert.

### Bezugszeichenliste

- 10: Prüfvorrichtung
- 11: Untergestell
- 12: Drehteller
- 13: Förderband
- 20: Messkopf
- 21: Kamera
- 22: Optische Achse Kamera
- 23: vertikales Linearsystem
- 24: horizontales Linearsystem
- 25: Schwenkachse
- 30: Abstandssensor
- 31: Laserstrahl für Abstandssensor 30
- 32: Abstandssensor
- 33: Laserstrahl für Abstandssensor 32
- 40: Fördermodul
- 41: Förderband
- 42: inkrementaler Schrittgeber
- 50: speicherprogrammierbare Steuerung

- 101, 102: Reifen
- 110: Bereich obere Schulter
- 111: Bereich Lauffläche
- 112: Bereich untere Schulter
- 113: erste Seitenwand
- 114: erster Wulst
- 115: zweite Seitenwand
- 116: zweiter Wulst

- 120: linke Sektorgrenze
- 121: rechte Sektorgrenze
- 122: äußere Begrenzungslinie
- 123: innere Begrenzungslinie
- 130: Gesichtsfeld

- 200: Aufnahme
- 205: Abbildung
- 210: Eingangsdaten
- 211: kritischer Bereich
- 212: unkritischer Bereich
- 220: Ergebnisdaten
- 221: erster Ergebnisdatensatz
- 222: zweiter Ergebnisdatensatz
- 230: Trainingsdaten
- 235: Trainingsdatensatz

- 250: Fehlerstelle
- 251: Fehlerstelle Lauffläche
- 252: Fehlerstelle Seitenwand
- 253: Fehlerstelle Wulst
- 254: Fehlerstelle Wulst

- 262: relevante Fehlerstelle
- 264: nicht relevante Anomalie

- 500: künstliches System
- 502: Prozessor
- 504: Speichermedium
- 506: Trainingsdatensatz

- Aᵣ: Rotationsachse des Reifens
- Bₘₐₓ: maximale Breite
- Bₛ: Breite an der Reifenschulter
- B_{w}: Breite am Reifenwulst
- B_{wi}: Breite am Reifenwulst
- Dₐ: Durchmesser außen
- Dₐᵢ: Durchmesser außen an der Innenseite
- Dᵢ: Durchmesser innen
- Pₐ: äußerer Begrenzungspunkt
- Pᵢ: innerer Begrenzungspunkt
- RME: Reifenmittenebene
- Fₖ: Hauptpunkt Kameraoptik
- Wₖ: Öffnungswinkel Sichtfeld Kamera
- Aₖ: Axiale oder vertikale Position der Kamera
- Rₖ: Radiale oder horizontale Position der Kamera

- DLM: Deep Learning Modul

- PS1: Parametersatz 1
- PS2: Parametersatz 2

## Patentansprüche

1. Verfahren zum interferometrischen Prüfen eines Reifens (101, 102) mittels eines künstlichen Systems (500), das einen Prozessor (502) und ein Speichermedium (504) aufweist, die zur Durchführung der nachfolgenden Verfahrensschritte geeignet sind, wobei das künstliche System (500), das mittels wenigstens eines Trainingsdatensatzes (235) angelernt wird, zur Erkennung von relevanten Fehlerstellen (250) geeignet ist, das Verfahren umfasst die folgenden Verfahrensschritte:
a) Erzeugen einer Aufnahme (200) mittels einer Kamera (21) von zumindest einem Teilbereich der Oberfläche des Reifens (101, 102);
b) Erstellen von Eingangsdaten (210), welche eine aus mindestens einer Aufnahme (200) bestehende Abbildung (205) umfasst;
c) Analysieren der Eingangsdaten (210) zur Bestimmung und Kategorisierung eines kritischen Bereichs (211), der eine relevante Fehlerstelle (262) umfasst, und eines unkritischen Bereichs (212), der eine nicht relevante Anomalie (264) umfasst;
d) Speichern der analysierten Abbildung (205) als um den unkritischen Bereich bereinigte Ergebnisdaten (220); und
e) Speichern der bereinigten Ergebnisdaten (220) als Trainingsdaten (230) in dem Trainingsdatensatz (235).

2. Verfahren nach Anspruch 1, **dadurch gekennzeichnet, dass** die nicht relevante Anomalie (264) eine irrelevante Verformung der Oberfläche des Reifens (101, 102) umfasst.

3. Verfahren nach Anspruch 1 oder 2, **dadurch gekennzeichnet, dass** die Aufnahme (200) ein Phasenbild, ein mit dem Phasenbild korrespondierendes Kontrastbild oder ein Videobild ist.

4. Verfahren nach einem der Ansprüche 1 bis 3, **dadurch gekennzeichnet, dass** zur Erstellung von Eingangsdaten (210) eine Sektorgrenze (120, 121) und/oder eine Begrenzungslinie (122, 123) zu der Aufnahme (200) ermittelt wird,
wobei die Sektorgrenze (120, 121) und/oder die Begrenzungslinie (122, 123) einen definierten Abschnitt der Oberfläche des Reifens (101, 102) begrenzt,
wobei die Eingangsdaten (210) den begrenzten und definierten Abschnitt umfassen, und
wobei vorzugsweise der außerhalb des definierten Abschnitts liegende Bereich entfernt wird.

5. Verfahren nach einem der Ansprüche 1 bis 4, **dadurch gekennzeichnet, dass** zur Erstellung der Abbildung (205) eine Lokalisierungsinformation über die Position einer Kamera (21) in Bezug auf den Reifen (101, 102) zum Zeitpunkt der mittels der Kamera (21) gemachten Aufnahme (200) verwendet wird;
wobei vorzugsweise wenigstens zwei Aufnahmen (200) unter Berücksichtigung der jeweilgen Lokalisierungsinformation zu der Abbildung (205) zusammengeführt werden;
wobei ferner vorzugsweise die Lokalisierungsinformation den Abstand und/oder die Ausrichtung der Kamera (21) zu dem aufgenommenen Teil der Oberfläche des Reifens (101, 102) und/oder eine Reifengeometrieinformation, insbesondere einen Axialschnitt, umfasst.

6. Verfahren nach Anspruch 5, **dadurch gekennzeichnet, dass** aus der Lokalisierungsinformation eine funktionale Gliederung des Reifens (101, 102) abgeleitet wird;
wobei vorzugsweise die funktionale Gliederung wenigstens einen, insbesondere zwei oder vorzugsweise drei, der folgenden Teilbereiche des Reifens (101, 102) aufweist: innerer erster Wulst (114_{I}), äußerer erster Wulst (114_{A}), innere erste Seitenwand (113_{I}), äußere erste Seitenwand (113_{A}), innere obere Schulter (110_{I}), äußere obere Schulter (110_{A}), Lauffläche (111), innerer zweiter Wulst (116_{I}), äußerer zweiter Wulst (116_{A}), innere zweite Seitenwand (115_{I}), äußere zweite Seitenwand (115_{A}), innere untere Schulter (112_{I}), äußere untere Schulter (112_{A}).

7. Verfahren nach Anspruch 5 oder 6, **dadurch gekennzeichnet, dass** die Abbildung (205) auf Basis der Lokalisierungsinformation normiert wird;
wobei vorzugsweise die Größe und/oder die Auflösung der Abbildung (205) auf einen Referenzmaßstab skaliert werden.

8. Verfahren nach einem der Ansprüche 3 bis 7, **dadurch gekennzeichnet, dass** bei der Verwendung von einer Vielzahl an Phasenbildern die Phasenwerte normiert werden, insbesondere bildpunktweise auf einen Referenzmaßstab skaliert werden;
wobei vorzugsweise die Phasenbilder vor der Normierung, insbesondere Skalierung, demoduliert werden;
wobei vorzugsweise in Schritt a) zur Erstellung eines Phasenbildes zwischen zwei unterschiedlichen Belastungszuständen des Reifens eine Vielzahl an Zwischenaufnahmen zur Berechnung des Phasenwertes gemacht wird und
wobei insbesondere die Phasenwerte von aufeinanderfolgenden Zwischenaufnahmen paarweise subtrahiert und die erhaltenen Differenzwerte aufsummiert werden.

9. Verfahren nach einem der Ansprüche 6 bis 8, **dadurch gekennzeichnet, dass** zur Bestimmung und/oder Kategorisierung des kritischen Bereichs (211) und/oder des unkritischen Bereichs (212) in Schritt c) die Eingangsdaten (201) auf Basis der funktionalen Gliederung gewichtet werden.

10. Verfahren nach einem der Ansprüche 1 bis 9, **dadurch gekennzeichnet, dass** bei der Bestimmung und/oder Kategorisierung des kritischen Bereichs (211) und/oder des unkritischen Bereichs (212) in Schritt c) die Größe einer Fehlerstelle (250) und/oder die Häufigkeit einer Fehlerstelle (250) und/oder der Abstand zwischen zwei Fehlerstellen (250) berücksichtigt werden.

11. Verfahren nach einem der Ansprüche 1 bis 10, **dadurch gekennzeichnet, dass** die Ergebnisdaten (220) gemäß Schritt d) in wenigstens zwei Ergebnisdatensätze (221, 222) gespeichert werden;
wobei vorzugsweise die Ergebnisdatensätze (221, 222) den sich durch die funktionale Gliederung ergebende Teilbereiche des Reifens (101, 102) zugeordnet werden;
wobei vorzugsweise die Eingangsdaten (210) und/oder die Ergebnisdaten (220) auf einer Anzeigeeinheit angezeigt werden;
wobei ferner vorzugsweise der kritische Bereich (211) hervorgehoben wird.

12. System zur Datenverarbeitung, umfassend Mittel zur Ausführung des Verfahrens nach einem der Ansprüche 1 bis 11, wobei die Mittel umfassen:
eine Kamera (21) zum Erzeugen einer Aufnahme (200) von zumindest einem Teilbereich der Oberfläche des Reifens (101, 102);
einen Prozessor (502) zum Erstellen von Eingangsdaten (210), welche eine aus mindestens einer Aufnahme (200) bestehenden Abbildung (205) umfasst, und zum Analysieren der Eingangsdaten (210) zur Bestimmung und Kategorisierung eines kritischen Bereichs (211), der eine relevante Fehlerstelle (262) umfasst, und eines unkritischen Bereichs (212), der eine nicht relevante Anomalie umfasst; und
ein Speichermedium (504) zum Speichern der analysierten Abbildung (205) als um den unkritischen Bereich (212) bereinigte Ergebnisdaten (220), und der bereinigten Ergebnisdaten (220) als Trainingsdaten (230) in dem Trainingsdatensatz (235).

13. Computerprogrammprodukt, umfassend Befehle, die, bei der Ausführung des Programms durch einen Computer, die Vorrichtung des Anspruchs 12 veranlassen, das Verfahren nach einem der Ansprüche 1 bis 11 auszuführen.

14. Computerlesbares Speichermedium auf dem das Computerprogrammprodukt nach Anspruch 13 gespeichert ist.

15. Prüfvorrichtung (10) zum Prüfen eines Reifens (101, 102) mittels eines Verfahrens nach einem der Ansprüche 1 bis 11, umfassend:
eine Prüfkammer;
eine Kamera (21) zum Erzeugen einer Aufnahme (200) von zumindest einem Teilbereich der Oberfläche des Reifens (101, 102);
einen Prozessor (502) zum Erstellen von Eingangsdaten (210), welche eine aus mindestens einer Aufnahme (200) bestehenden Abbildung (205) umfasst, und zum Analysieren der Eingangsdaten (210) zur Bestimmung und Kategorisierung eines kritischen Bereichs (211) und eines unkritischen Bereichs (212), wobei ein kritischer Bereich (211) eine relevante Fehlerstelle (262) umfasst; und
ein Speichermedium (504) zum Speichern der analysierten Abbildung (205) als um den unkritischen Bereich (212) bereinigte Ergebnisdaten (220) und der bereinigten Ergebnisdaten (220) als Trainingsdaten (230) in dem Trainingsdatensatz (235).

## Claims

1. A method for interferometric testing of a tyre (101, 102) by means of an artificial system (500) which has a processor (502) and a storage medium (504) which are suitable for carrying out the following method steps, the artificial system (500), which is trained by means of at least one training data set (235), being suitable for detecting relevant defect locations (250), the method comprising the following method steps:
a) Generating a picture (200) by means of a camera (21) of at least a partial area of the surface of the tyre (101, 102);
b) generating input data (210) comprising an image (205) consisting of at least one picture (200);
c) analysing the input data (210) to determine and categorise a critical region (211) comprising a relevant defect location (262) and a non-critical region (212) comprising a non-relevant anomaly (264);
d) Saving the analysed image (205) as result data adjusted for the non-critical region (220); and
e) Saving the adjusted result data (220) as training data (230) in the training data set (235).

2. The method according to claim 1, **characterised in that** the non-relevant anomaly (264) comprises an irrelevant deformation of the surface of the tyre (101, 102).

3. The method according to claim 1 or 2, **characterised in that** the picture (200) is a phase image, a contrast image corresponding to the phase image or a video image.

4. The method according to any one of claims 1 to 3, **characterised in that** a sector boundary (120, 121) and/or a boundary line (122, 123) to the picture (200) is determined for the creation of input data (210),
wherein the sector boundary (120, 121) and/or the boundary line (122, 123) delimits a defined section of the surface of the tyre (101, 102),
wherein the input data (210) comprises the bounded and defined section, and
preferably removing the area outside the defined section.

5. The method according to any one of claims 1 to 4, **characterised in that** localisation information about the position of a camera (21) in relation to the tyre (101, 102) at the time of the picture (200) taken by means of the camera (21) is used to create the image (205);
wherein preferably at least two pictures (200) are combined to form the image (205), taking into account the respective localisation information;
wherein further preferably the localisation information comprises the distance and/or the orientation of the camera (21) to the recorded part of the surface of the tyre (101, 102) and/or a tyre geometry information, in particular an axial section.

6. The method according to claim 5, **characterised in that** a functional structure of the tyre (101, 102) is derived from the localisation information;
wherein preferably the functional structure comprises at least one, in particular two or preferably three, of the following sub-regions of the tyre (101, 102): inner first bead (114_{I}), outer first bead (114_{A}), inner first sidewall (113_{I}), outer first sidewall (113_{A}), inner upper shoulder (110_{I}), outer upper shoulder (110_{A}), tread (111), inner second bead (116_{I}), outer second bead (116_{A}), inner second side wall (115_{I}), outer second side wall (115_{A}), inner lower shoulder (112_{I}), outer lower shoulder (112_{A}).

7. The method according to claim 5 or 6, **characterised in that** the image (205) is normalised on the basis of the localisation information;
wherein preferably the size and/or the resolution of the image (205) are scaled to a reference scale.

8. The method according to any one of claims 3 to 7, **characterised in that** when using a plurality of phase images, the phase values are normalised, in particular scaled to a reference scale pixel by pixel;
wherein the phase images are preferably demodulated before normalisation, in particular scaling;
wherein preferably in step a) a plurality of intermediate images are taken to calculate the phase value in order to create a phase image between two different load states of the tyre, and
wherein preferably the phase values of successive intermediate images are subtracted in pairs and the resulting difference values are totalled.

9. The method according to any one of claims 6 to 8, **characterised in that** for determining and/or categorising the critical region (211) and/or the non-critical region (212) in step c), the input data (201) are weighted on the basis of the functional classification.

10. The method according to any one of claims 1 to 9, **characterised in that** the size of a defect location (250) and/or the frequency of a defect location (250) and/or the distance between two defect locations (250) are taken into account when determining and/or categorising the critical region (211) and/or the non-critical region (212) in step c).

11. The method according to any one of claims 1 to 10, **characterised in that** the result data (220) according to step d) is stored in at least two result data sets (221, 222);
wherein the result data sets (221, 222) are preferably assigned to the sub-areas of the tyre (101, 102) resulting from the functional classification;
wherein preferably the input data (210) and/or the result data (220) are displayed on a display unit;
wherein the critical region (211) is further preferably highlighted.

12. A system for data processing comprising means for carrying out the method according to any one of claims 1 to 11, wherein the means comprise:
a camera (21) for producing a picture (200) of at least a partial area of the surface of the tyre (101, 102);
a processor (502) for generating input data (210) comprising an image (205) consisting of at least one picture (200), and analysing the input data (210) to determine and categorise a critical region (211) comprising a relevant defect location (262) and a non-critical region (212) comprising a non-relevant anomaly; and
a storage medium (504) for storing the analysed image (205) as result data (220) adjusted for the non-critical region (212), and the adjusted result data (220) as training data (230) in the training data set (235).

13. A computer program product comprising instructions which, when the program is executed by a computer, cause the apparatus of claim 12 to perform the method of any one of claims 1 to 11.

14. A computer-readable storage medium on which the computer program product according to claim 13 is stored.

15. A testing device (10) for testing a tyre (101, 102) by means of a method according to any one of claims 1 to 11, comprising:
a test chamber;
a camera (21) for producing a picture (200) of at least a partial area of the surface of the tyre (101, 102);
a processor (502) for generating input data (210) comprising an image (205) consisting of at least one picture (200), and for analysing the input data (210) to determine and categorise a critical region (211) and a non-critical region (212), wherein a critical region (211) comprises a relevant defect location (262); and
a storage medium (504) for storing the analysed image (205) as result data (220) adjusted for the non-critical region (212) and the adjusted result data (220) as training data (230) in the training data set (235).

## Revendications

1. Procédé de test interférométrique d'un pneu (101, 102) au moyen d'un système artificiel (500), qui présente un processeur (502) et un support de stockage (504), qui sont appropriés à l'exécution des étapes de procédé suivantes, le système artificiel (500), qui est appris au moyen d'au moins un jeu de données d'entraînement (235), étant approprié à la reconnaissance de points de défaut (250) pertinents, le procédé comprenant les étapes de procédé suivantes :
a) la production d'une prise de vue (200) au moyen d'une caméra (21) d'au moins une zone partielle de la surface du pneu (101, 102) ;
b) la création de données d'entrée (210) comprenant une image (205) constituée d'au moins une prise de vue (200) ;
c) analyser les données d'entrée (210) pour déterminer et catégoriser une zone critique (211) comprenant un emplacement de défaut pertinent (262) et une zone non critique (212) comprenant une anomalie non pertinente (264) ;
d) enregistrer l'image analysée (205) en tant que données de résultats corrigées de la zone non critique (220) ; et
e) stocker les données de résultat corrigées (220) en tant que données d'entraînement (230) dans le jeu de données d'entraînement (235).

2. Procédé selon la revendication 1, **caractérisé en ce que** l'anomalie non pertinente (264) comprend une déformation non pertinente de la surface du pneu (101, 102).

3. Procédé selon la revendication 1 ou 2, **caractérisé en ce que** la prise de vue (200) est une image de phase, une image de contraste correspondant à l'image de phase ou une image vidéo.

4. Procédé selon l'une des revendications 1 à 3, **caractérisé en ce que**, pour établir des données d'entrée (210), on détermine une limite de secteur (120, 121) et/ou une ligne de délimitation (122, 123) par rapport à la prise de vue (200),
la limite de secteur (120, 121) et/ou la ligne de délimitation (122, 123) délimitant une section définie de la surface du pneu (101, 102),
dans lequel les données d'entrée (210) comprennent la section délimitée et définie, et
la zone située à l'extérieur de la section définie étant de préférence retirée.

5. Procédé selon l'une des revendications 1 à 4, **caractérisé en ce que**, pour réaliser l'image (205), on utilise une information de localisation de la position d'une caméra (21) par rapport au pneumatique (101, 102) au moment de la prise de vue (200) réalisée au moyen de la caméra (21) ;
de préférence au moins deux prises de vue (200) étant réunies pour former l'image (205) en tenant compte de l'information de localisation respective ;
où en outre, de préférence, l'information de localisation comprend la distance et/ou l'orientation de la caméra (21) par rapport à la partie enregistrée de la surface du pneu (101, 102) et/ou une information de géométrie du pneu, en particulier une coupe axiale.

6. Procédé selon la revendication 5, **caractérisé en ce qu'**une structure fonctionnelle du pneu (101, 102) est déduite de l'information de localisation
de préférence, la structure fonctionnelle comprenant au moins une, en particulier deux ou de préférence trois, des zones partielles suivantes du pneu (101, 102) : premier bourrelet intérieur (114_{I}), premier bourrelet extérieur (114_{A}), premier paroi latérale intérieur (113_{I}), premier paroi latérale extérieur (113_{A}), épaulement supérieur intérieur (110_{I}), épaulement supérieur extérieur (110_{A}), bande de roulement (111), deuxième bourrelet intérieur (116_{I}), deuxième bourrelet extérieur (116_{A}), deuxième paroi latérale intérieure (115_{I}), deuxième paroi latérale extérieure (115_{A}), épaulement inférieur intérieur (112_{I}), épaulement inférieur extérieur (112_{A}).

7. Procédé selon la revendication 5 ou 6, **caractérisé en ce que** l'image (205) est normalisée sur la base des informations de localisation ;
dans lequel, de préférence, la taille et/ou la résolution de l'image (205) sont mises à l'échelle à une échelle de référence.

8. Procédé selon l'une des revendications 3 à 7, **caractérisé en ce que**, lors de l'utilisation d'une pluralité d'images de phase, les valeurs de phase sont normalisées, en particulier mises à l'échelle, point d'image par point d'image, à une échelle de référence ;
les images de phase étant de préférence démodulées avant la normalisation, en particulier la mise à l'échelle ;
dans lequel, de préférence, à l'étape a), pour établir une image de phase entre deux états de charge différents du pneu, on prend une pluralité de clichés intermédiaires pour calculer la valeur de phase, et
les valeurs de phase de prises de vue intermédiaires successives étant notamment soustraites par paires et les valeurs différentielles obtenues étant additionnées.

9. Procédé selon l'une des revendications 6 à 8, **caractérisé en ce que**, pour déterminer et/ou catégoriser la zone critique (211) et/ou la zone non critique (212) à l'étape c), les données d'entrée (201) sont pondérées sur la base de la classification fonctionnelle.

10. Procédé selon l'une des revendications 1 à 9, **caractérisé en ce que**, lors de la détermination et/ou de la catégorisation de la zone critique (211) et/ou de la zone non critique (212) à l'étape c), on prend en compte la taille d'un emplacement de défaut (250) et/ou la fréquence d'un emplacement de défaut (250) et/ou la distance entre deux emplacements de défaut (250).

11. Procédé selon l'une des revendications 1 à 10, **caractérisé en ce que** les données de résultat (220) selon l'étape d) sont stockées dans au moins deux ensembles de données de résultat (221, 222) ;
de préférence, les enregistrements de résultats (221, 222) étant associés aux zones partielles du pneu (101, 102) résultant de la structure fonctionnelle ;
dans lequel, de préférence, les données d'entrée (210) et/ou les données de résultat (220) sont affichées sur une unité d'affichage ;
la zone critique (211) étant en outre de préférence mise en évidence.

12. Système de traitement de données comprenant des moyens pour mettre en oeuvre le procédé selon l'une quelconque des revendications 1 à 11, lesdits moyens comprenant :
une caméra (21) pour produire une prise de vue (200) d'au moins une partie de la surface du pneu (101, 102) ;
un processeur (502) pour créer des données d'entrée (210) comprenant une image (205) constituée d'au moins une prise de vue (200), et pour analyser les données d'entrée (210) afin de déterminer et de catégoriser une zone critique (211) comprenant un emplacement de défaut pertinent (262) et une zone non critique (212) comprenant une anomalie non pertinente ; et
un support de stockage (504) pour stocker l'image analysée (205) en tant que données de résultat (220) corrigées de la zone non critique (212), et les données de résultat corrigées (220) en tant que données d'entraînement (230) dans le jeu de données d'entraînement (235).

13. Produit de programme d'ordinateur comprenant des instructions qui, lors de l'exécution du programme par un ordinateur, amènent le dispositif de la revendication 12 à exécuter le procédé selon l'une quelconque des revendications 1 à 11.

14. Support de stockage lisible par ordinateur sur lequel est stocké le produit programme d'ordinateur selon la revendication 13.

15. Dispositif de test (10) pour tester un pneu (101, 102) au moyen d'un procédé selon l'une quelconque des revendications 1 à 11, comprenant :
une chambre d'essai ;
une caméra (21) pour produire une prise de vue (200) d'au moins une partie de la surface du pneu (101, 102) ;
un processeur (502) pour créer des données d'entrée (210) comprenant une image (205) constituée d'au moins une prise de vue (200) et pour analyser les données d'entrée (210) afin de déterminer et de catégoriser une zone critique (211) et une zone non critique (212), dans lequel une zone critique (211) comprend un emplacement de défaut pertinent (262) ; et
un support de stockage (504) pour stocker l'image analysée (205) en tant que données de résultat (220) corrigées de la zone non critique (212), et les données de résultat corrigées (220) en tant que données d'entraînement (230) dans le jeu de données d'entraînement (235).
